# EUROPÄISCHE PATENTANMELDUNG

(11) **EP 3 858 532 A1**
(43) Veröffentlichungstag der Anmeldung: **04.08.2021**
(21) Anmeldenummer: 20154411.1
(22) Anmeldetag: 29.01.2020
(51) Int. Cl.: B23K 11/00, B21J 15/32, B23K 11/11, B23K 11/36, B23P 19/00, F16B 37/04, B23K 37/047

(54) **ELEMENTZUFUHRVORRICHTUNG FÜR EIN SETZ-SCHWEISS-GERÄT, EIN ELEMENTNEST UND EIN NACHRÜSTSATZ FÜR DAS SETZ-SCHWEISS-GERÄT SOWIE ENTSPRECHENDE ZUFUHRVERFAHREN EINES SCHWEISSHILFSFÜGETEILS**

(71) Anmelder: Böllhoff Verbindungstechnik GmbH, 33649 Bielefeld (DE)
(72) Erfinder: SCHRÖDER, Dennis, 32052 Herford (DE); HAESLER, Bernd, 33790 Halle (DE); DOEDTMANN, Kilian, 49565 Bramsche (DE); REHLING, Stefan, 31675 Bückeburg (DE); HARTWIG-BIGLAU, Sergej, 32120 Hiddenhausen (DE); WESTERMANN, Wilhelm, 33719 Bielefeld (DE); SCHIENSTOCK, Oliver, 33129 Delbrück (DE)
(74) Vertreter: HWP Intellectual Property

(57) **Zusammenfassung**

Eine Elementzufuhrvorrichtung 3 eines Setz-Schweiß-Geräts 1 für ein Schweißhilfsfügeteil 2 mit einem Kopf und einem Schaft, welche die folgenden Merkmale aufweist: einen Linearantrieb 10, der an dem Schweiß-Setz-Gerät 1 befestigbar ist und der an einem bewegbaren Ende 12 ein Elementnest 30 aufweist, in welchem ein Schweißhilfsfügeteil 2 von einer Übergabeeinheit 7 lösbar aufnehmbar ist, und das Elementnest 30 ist über eine Linearbewegung des Linearantriebs 10 in eine erste Bewegungsrichtung R₁₀ zumindest zu einer Fügestelle des Schweißhilfsfügeteils 2 bewegbar, wobei das Elementnest 30 in einer Ebene annähernd senkrecht zu einer Fügerichtung R_{F} schwimmend gelagert ist, um über eine mechanische Anschlagausrichtung anliegend an einem Elektrodenstempel S in Fügerichtung R_{F} unterhalb des Elektrodenstempels S positionierbar zu sein, und/oder wobei das Elementnest 30 mit dem bewegbaren Ende 12 des Linearantriebs 10 über eine mechanische richtungsändernde Kopplungskomponente 20 verbunden ist, so dass das Elementnest 30 mittels der Linearbewegung des Linearantriebs 10 in der ersten Bewegungsrichtung R₁₀ in eine zweite Bewegungsrichtung R₃₀ bewegbar ist, so dass das Schweißhilfsfügeteil 2 an der Fügestelle positionierbar ist, wobei die zweite Bewegungsrichtung R₃₀ in einem Winkel ungleich 0° und ungleich 180° zur ersten Bewegungsrichtung R₁₀ orientiert ist.

## Beschreibung

### 1. Gebiet der Erfindung

Die vorliegende Erfindung betrifft eine Elementzufuhrvorrichtung eines Setz-Schweiß-Geräts für ein Schweißhilfsfügeteil mit einem Kopf und einem Schaft. Des Weiteren betrifft vorliegende Erfindung ein Elementnest eines Schweißhilfsfügeteils für ein Setz-Schweiß-Gerät, sowie ein Setz-Schweiß-Gerät, welches mit der Elementzufuhrvorrichtung und/oder dem genannten Elementnest ausgestattet ist. Zudem betrifft vorliegende Erfindung einen Nachrüstsatz einer Elementzufuhrvorrichtung sowie eines Elementnests für ein existierendes Setz-Schweiß-Gerät. Des Weiteren sind Zufuhrverfahren eines Schweißhilfsfügeteils zu einer Fügestelle in einem Setz-Schweiß-Gerät definiert. Dazu verwendet das jeweilige Zufuhrverfahren die oben genannte Elementzufuhrvorrichtung und/oder das Elementnest.

### 2. Hintergrund der Erfindung

Im Stand der Technik sind verschiedene Setz-Schweiß-Geräte bekannt, denen über teilweise sehr aufwändige Elementzufuhrsysteme Schweißhilfsfügeteile zugeführt werden. Aufwendig sind in diesem Zusammenhang die Elementzufuhrsysteme deshalb, weil mithilfe mehrerer Antriebe die Wege zwischen einer Übergabeeinheit für das Schweißhilfsfügeteil und der Fügestelle überbrückt werden müssen. Zudem ist es erforderlich, dass die Positionierung der Elementzufuhrvorrichtung an der Übergabeeinheit für das Schweißhilfsfügeteil sowie an der Fügestelle zur Übergabe des Schweißhilfsfügeteils an den Elektrodenstempel mit ausreichender Sensorik abgesichert werden muss.

In diesem Zusammenhang offenbart DE 10 2017 112 448 A1 ein Setz-Schweiß-Gerät, welches sich durch eine konstruktiv aufwändige Übergabe und Zufuhr eines Schweißhilfsfügeteils auszeichnet. In diesem Setz-Schweiß-Gerät wird zunächst ein Schweißhilfsfügeteil von einer Klammeranordnung an eine zweite Klammeranordnung übergeben, bevor das Schweißhilfsfügeteil der Fügestelle zugeführt wird. Dies erfordert zwei komplexe und aufeinander abgestimmte Klammerkonstruktionen im Hinblick auf Sensorik und Antriebe. Komplex insofern, dass die klammereigenen Sensoren und Antriebe die Übergabe jedes Schweißhilfsfügeteils sicherstellen müssen. Da die Übergabe des Schweißhilfsfügeteils entfernt von der Fügestelle unter dem Elektrodenstempel erfolgt, sind zudem mehrere Antriebe für eine Zufuhr zur Fügestelle erforderlich. Diese Antriebe wirken in mindestens zwei unterschiedliche Bewegungsrichtungen. Dies erfordert nötige Steuerelektronik, Sensorik und Bauraum für Antriebe und Sensorik, die sich insgesamt nachteilig auf die Störkontur des Setz-Schweiß-Geräts auswirken.

In WO 2017/048912 A1 wird das Schweißhilfsfügeteil direkt einem Elementnest unter dem Elektrodenstempel zugeblasen. Diese Konstruktion basiert auf der genauen Ausrichtung des Elementnests am Ende des Profilkanals zum Elementstempel. Dazu weist der Profilkanal eine große Störkontur auf. Zudem muss der Profilkanal mit seiner Störkontur passend positioniert werden, um das Elementnest unter den Elektrodenstempel zu bringen. Zudem ist es erforderlich, dass der Profilkanal vom Elektrodenstempel entfernt wird, bevor eine Schweißverbindung hergestellt werden kann. Zur Realisierung der genauen Positionierung des Elementnests unter dem Elektrodenstempel und zum regelmäßigen Verfahren der Elementzufuhr in unmittelbare Nähe des Elektrodenstempels und in ausreichende Entfernung zum Elektrodenstempel ist ebenfalls eine aufwändige und genau abgestimmte Sensorik und Antriebstechnik erforderlich. Denn weder das Elementnest selbst noch der damit verbundene Profilkanal lassen den Ausgleich von Toleranzen bei der Ausrichtung zwischen Elektrodenstempel und Schweißhilfsfügeteil zu.

EP 3 199 288 A2 offenbart ein Setz-Schweiß-Gerät mit einem Elementnest, welches das Schweißhilfsfügeteil präzise unter dem Elektrodenstempel platziert. Danach wird das Schweißhilfsfügeteil mit dem Elektrodenstempel mitgeführt und am Bauteil geklemmt. Der Zuschuss des Schweißhilfsfügeteils erfolgt direkt in das Elementnest. Die Positionierung des Elementnests unter dem Elektrodenstempel ist toleranzfrei, so dass eine ausreichende Absicherung durch Sensoren und Antriebe erfolgen muss. Abnutzungen des Elektrodenstempels werden ausgeglichen, indem das Elementnest mit dem Schweißhilfsfügeteil gegen die Unterseite des Elektrodenstempels gefahren wird. Das sich dann anschließende Bewegen von Elektrodenstempel und Elementnest erfordert aber ebenfalls einen hohen Abstimmungs- und Steueraufwand.

Im Hinblick auf die Vielzahl der im Stand der Technik bekannten Zufuhrkonstruktionen und Systeme an Setz-Schweiß-Geräten ist es die Aufgabe vorliegender Erfindung, eine einfachere Elementzufuhrvorrichtung mit einem effizienteren konstruktiven Aufwand und Steueraufwand bereitzustellen.

### 3. Zusammenfassung der Erfindung

Die obige Aufgabe wird durch eine Elementzufuhrvorrichtung eines Setz-Schweiß-Geräts für ein Schweißhilfsfügeteil mit einem Kopf und einem Schaft gemäß dem unabhängigen Patentanspruch 1 gelöst. Des Weiteren löst obige Aufgabe ein Elementnest eines Schweißhilfsfügeteils in einem Setz-Schweiß-Gerät, vorzugsweise in einer Elementzufuhrvorrichtung eines Setz-Schweiß-Geräts, gemäß dem unabhängigen Patentanspruch 8. Außerdem wird obige Aufgabe durch ein Setz-Schweiß-Gerät für ein Schweißhilfsfügeteil mit einem Kopf und einem Schaft in Kombination mit der oben genannten Elementzufuhrvorrichtung sowie in Kombination bzw. oder in Kombination mit dem oben genannten Elementnest gemäß dem unabhängigen Patentanspruch 12 gelöst. Außerdem umfasst vorliegende Erfindung einen Nachrüstsatz für eine Elementzufuhrvorrichtung oder ein Elementnest gemäß dem unabhängigen Patentanspruch 13. Des Weiteren wird im Zusammenhang mit der bereits oben genannten Elementzufuhrvorrichtung ein Zufuhrverfahren gemäß dem unabhängigen Patentanspruch 14 sowie ein Zufuhrverfahren eines Schweißhilfsfügeteils für ein Setz-Schweiß-Gerät in Kombination mit dem oben genannten Elementnest gemäß dem unabhängigen Patentanspruch 19 offenbart. Weiterentwicklungen und Modifikationen vorliegender Erfindung gehen aus der folgenden Beschreibung, den begleitenden Zeichnungen sowie den anhängenden Patentansprüchen hervor.

Die erfindungsgemäße Elementzufuhrvorrichtung eines Setz-Schweiß-Geräts für ein Schweißhilfsfügeteil mit einem Kopf und einem Schaft weist die folgenden Merkmale auf: einen Linearantrieb, der an dem Schweiß-Setz-Gerät befestigbar ist und der an einem bewegbaren Ende ein Elementnest aufweist, in welchem ein Schweißhilfsfügeteil, insbesondere von einer Übergabeeinheit, lösbar aufnehmbar ist, und das Elementnest ist über eine Linearbewegung des Linearantriebs in eine erste Bewegungsrichtung zumindest zu einer Fügestelle des Schweißhilfsfügeteils bewegbar, wobei gemäß Alternative 1 das Elementnest in einer Ebene annähernd senkrecht zu einer Fügerichtung schwimmend gelagert ist, um über eine mechanische Anschlagausrichtung anliegend an einem Elektrodenstempel in Fügerichtung unterhalb des Elektrodenstempels positionierbar zu sein, und/oder wobei gemäß Alternative 2 das Elementnest mit dem bewegbaren Ende des Linearantriebs über eine mechanische richtungsändernde Kopplungskomponente verbunden ist, so dass das Elementnest mittels der Linearbewegung des Linearantriebs in der ersten Bewegungsrichtung in eine zweite Bewegungsrichtung bewegbar ist, so dass das Schweißhilfsfügeteil an der Fügestelle positionierbar ist, wobei die zweite Bewegungsrichtung in einem Winkel ungleich 0° und ungleich 180° zur ersten Bewegungsrichtung orientiert ist.

Die erfindungsgemäße Elementzufuhrvorrichtung ist darauf gerichtet, die Konstruktion bekannter Setz-Schweiß-Geräte im Hinblick auf die Elementzufuhr zu vereinfachen. Vereinfachung betrifft dabei die Nutzung von Sensorik, Antriebstechnik und erforderliche Störkontur, um ein Schweißhilfsfügeteil zunächst von einer Übergabeeinheit zu übernehmen und nachfolgend der Fügestelle effektiv zuzuführen. Im Hinblick auf diese übergeordnete Thematik beschreibt die erfindungsgemäße Elementzufuhr zwei alternative Ansätze, die einzeln oder in Kombination miteinander genutzt werden können. Beide Alternativen 1 und 2 arbeiten dazu grundsätzlich mit mindestens einem Linearantrieb zusammen, der an dem Schweiß-Setz-Gerät befestigbar ist. Gemäß einer bevorzugten Ausgestaltung vorliegender Erfindung ist die Verwendung nur eines Linearantriebs ausreichend, um eine verlässliche Elementzufuhr zur Fügestelle zu realisieren. Nichtsdestotrotz ist es ebenfalls denkbar, beispielsweise das unten näher erläuterte Elementnest auch mit der Kombination von beispielsweise zwei Linearantrieben der Fügestelle zuzuführen.

An einem bewegbaren Ende des Linearantriebs, insbesondere an dem Arbeitsende des Linearantriebs, ist das Elementnest bewegbar angeordnet. Da man sich vorzugsweise auf die Nutzung nur eines Linearantriebs beschränkt, bewegt dieser Linearantrieb das Elementnest in eine erste Bewegungsrichtung, die der Linearantrieb vorgibt. Das Elementnest hat eine gewisse Vororientierung, so dass in diesem Elementnest das Schweißhilfsfügeteil mit seiner Längsachse ausgerichtet annähernd parallel zur späteren Fügerichtung aufnehmbar ist. Das Elementnest zeichnet sich weiterhin dadurch aus, dass es in einer Ebene annähernd senkrecht zur Fügerichtung schwimmend gelagert ist. Diese schwimmende Lagerung eröffnet eine toleranzbehaftete Zufuhr des im Elementnest aufgenommenen Schweißhilfsfügeteils zur Fügestelle. Toleranzbehaftet bedeutet in diesem Zusammenhang, dass trotz einer möglichst genauen Anordnung des Schweißhilfsfügeteils unterhalb des Elektrodenstempels gewisse Abweichungen zwischen einer Längsachse des Schweißhilfsfügeteils und einer Längsachse des Elektrodenstempels vorhanden sein können. Das heißt im Besonderen, dass das Schweißhilfsfügeteil nicht notwendigerweise koaxial zum Elektrodenstempel angeordnet sein muss. Die schwimmende Lagerung des Elementnests garantiert aber, dass mit einem wirksamen direkten oder indirekten Kontakt zwischen dem Elementnest und dem Elektrodenstempel eine bevorzugt koaxiale Ausrichtung zwischen dem Schweißhilfsfügeteil und dem Elektrodenstempel erfolgt. Mit dieser gezielten Ausrichtung zwischen dem Schweißhilfsfügeteil und dem Elektrodenstempel wird die danach folgende Herstellung der Fügeverbindung vorbereitet.

Aus dem oben beschriebenen Zusammenhang ist erkennbar, dass der Elektrodenstempel aufgrund seines Kontakts mit dem Elementnest in der Lage ist, das Elementnest innerhalb der schwimmenden Lagerung derart zu verschieben und auszurichten, dass sich eine koaxiale Anordnung zwischen Schweißhilfsfügeteil und Elektrodenstempel ergibt. Dieses Zusammenwirken erfordert weder eine zusätzliche Sensorik zum Erkennen der Position von Elementnest und/oder Elektrodenstempel noch zusätzliche Antriebe, um auf eine genaue koaxiale Ausrichtung des Schweißhilfsfügeteils unterhalb des Elektrodenstempels hinzuwirken. Insofern erzielt diese rein konstruktive Lösung ohne zusätzlichen elektronischen Steuer- und Antriebsaufwand eine effiziente Positionierung des Schweißhilfsfügeteils unterhalb des Elektrodenstempels.

Gemäß der weiteren erfindungsgemäßen Alternative 2, die allein oder in Kombination mit dem oben diskutierten Elementnest gemäß Alternative 1 eingesetzt wird, ist das Elementnest mit dem bewegbaren Ende des Linearantriebs über eine mechanische richtungsändernde Kopplungskomponente verbunden. Die Bezeichnung mechanische richtungsändernde Kopplungskomponente unterstreicht zunächst, dass mit ihr eine Abweichung der Bewegungsrichtung des Elementnests von der ersten Bewegungsrichtung des Linearantriebs realisiert wird. Zu diesem Zweck ist es ebenfalls nicht nötig, dass ein weiterer Linearantrieb mit dem ersten Linearantrieb kombiniert wird. Vielmehr werden bewegbare Teile derart zusammengeschaltet, dass mithilfe der nur einen Linearbewegung des Linearantriebs das Elementnest mit dem zuzuführenden Schweißhilfsfügeteil auch in eine zweite Bewegungsrichtung bewegbar ist.

Zu diesem Zweck ist bevorzugt das Elementnest linear oder rotatorisch verschiebbar gelagert, wobei diese lineare Bewegungsrichtung ungleich der Bewegungsrichtung des Linearantriebs ist. Zudem ist es bevorzugt, den Linearantrieb über die richtungsändernde Kopplungskomponente mit dem Elementnest in seiner linear verschiebbaren Lagerung zu verbinden. Diese Kopplungskomponente zeichnet aus, dass sie mit dem Linearantrieb und dem Elementnest über entsprechende Befestigungspunkte, vorzugsweise Befestigungszapfen, drehbar verbunden ist. Zudem gibt es einen dritten Befestigungspunkt, vorzugsweise in Form eines Befestigungszapfens oder -stifts, der ebenfalls auch als Drehpunkt für diese Kopplungskomponente dient. Dieser Drehpunkt liegt außerhalb einer Verbindungslinie zwischen den beiden Befestigungspunkten zum Linearantrieb und zum Elementnest, so dass mithilfe der richtungsändernden Komponente eine Linearbewegung des Linearantriebs in eine andere Bewegungsrichtung, insbesondere Linearbewegung, des verschiebbaren Elementnests unwandelbar ist.

In diesem Zusammenhang ist es von Bedeutung, dass die richtungsändernde Komponente derart ausgelegt ist, dass die lineare Bewegungsrichtung des Linearantriebs und die Bewegungsrichtung des Elementnests nach der richtungsändernden Komponente in einem bestimmten Winkel zueinander ausgerichtet sind, der ungleich 0° und ungleich 180° ist. Gemäß einer bevorzugten Ausgestaltung dieser erfindungsgemäßen Alternative schließen die beiden, insbesondere linearen, Bewegungsrichtungen einen stumpfen Winkel ein.

Gemäß einer bevorzugten Ausgestaltung der Elementzufuhrvorrichtung nach der zweiten Alternative, die die mechanisch richtungsändernde Kopplungskomponente verwendet, weist die richtungsändernde Kopplungskomponente einen drehbar angeordneten Kopplungshebel auf, der an zueinander beabstandeten zwei Befestigungspunkten mit dem Linearantrieb und dem Elementnest verbunden ist und der an einem dritten Befestigungspunkt drehbar befestigt ist, wobei der dritte Befestigungspunkt außerhalb einer gedachten Verbindungslinie zwischen dem ersten und dem zweiten Befestigungspunkt liegt.

Gemäß der obigen Beschreibung ist die richtungsändernde Kopplungskomponente vorzugsweise ähnlich einem Kniehebelgelenk ausgebildet. Von Bedeutung ist in diesem Zusammenhang jedoch, dass die richtungsändernde Kopplungskomponente zur Übertragung einer linearen Bewegung und zur Umwandlung der Bewegungsrichtung dieser linearen Bewegung in eine andere Bewegungsrichtung dient. Die Kopplungskomponente ist nicht dafür ausgelegt, dass eine Drehmomentänderung oder eine Kraftänderung durch die Kopplungskomponente realisiert werden soll. Vielmehr soll die Kopplungskomponente auf belastbare und verlässliche Weise sicherstellen, dass mit der nur einen Linearbewegung des vorzugsweise nur einen Linearantriebs auch eine Zustellbewegung des Elementnests in eine zweite Bewegungsrichtung realisiert werden kann. Denn auf diese Weise wird auch ohne zusätzliche Sensorik und Antriebstechnik mit dem nur einen Linearantrieb eine relativ positionsgenaue Anordnung des Schweißhilfsfügeteils unter dem Elektrodenstempel bereitgestellt.

Wie bereits oben an verschiedenen Stellen angedeutet worden ist, wird vorzugsweise die Elementzufuhrvorrichtung der bevorzugten Ausführungsformen mit nur einem Linearantrieb realisiert. Denn dieser nur eine Linearantrieb ist ausreichend, um das Elementnest verlässlich der Fügestelle zuzuführen, selbst wenn dazu zwei winklig zueinander angeordnete Linearbewegungen erforderlich sein sollten.

Gemäß einer weiteren bevorzugten Ausgestaltung der Elementzufuhrvorrichtung in Kombination mit der oben genannten Alternative 1 der ersten Ausgestaltung oder gemäß einer der vorhergehenden bevorzugten Ausgestaltungen weist das Elementnest zwei einander gegenüberliegend angeordnete und relativ zueinander federnde Elementbacken auf, mit denen das Schweißhilfsfügeteil lösbar haltbar ist und die in einer Ebene senkrecht zu der Fügerichtung des Schweiß-Setz-Geräts schwimmend gelagert sind.

Aus bekannten Setz-Schweiß-Geräten gehen bereits Elementnester hervor, in denen das zuzuführende Schweißhilfsfügeteil zwischen Elementbacken gehalten wird. Größtenteils sind diese Elementbacken über Hebelverbindungen derart bewegbar, dass sie scherenartig oder zangenartig das Schweißhilfsfügeteil halten und wieder freigeben können. Für eine derartige Konstruktion ist es natürlich erforderlich, gezielte Antriebstechnik und meist auch Sensorik einzusetzen. Um diese Konstruktion zu vereinfachen, nutzt das erfindungsgemäß bevorzugte Elementnest zwei federnde Elementbacken, die relativ zueinander federnd bewegbar sind. Das bedeutet, dass entweder nur eine Elementbacke federnd gelagert ist oder dass beide Elementbacken federn können, um ein Schweißhilfsfügeteil klemmend festhalten aber auch freigeben zu können. Diese bevorzugte Konstruktion garantiert beispielsweise, dass an einer Übergabeeinheit ein Schweißhilfsfügeteil zwischen die Elementbacken geklemmt werden kann. Damit ist für den weiteren Transportweg bzw. den Zufuhrweg zur Fügestelle das Schweißhilfsfügeteil zwischen den Elementbacken verlässlich gehalten. In gleicher Weise realisiert dieser federnde Halt des Schweißhilfsfügeteils zwischen den relativ zueinander federnd gelagerten Elementbacken, dass bei einer Klemmung des Schweißhilfsfügeteils zwischen dem Elektrodenstempel und einem Bauteil das Elementnest von dem Schweißhilfsfügeteil abgezogen werden kann. Somit ist auch ein einfaches Lösen des Schweißhilfsfügeteils aus dem Elementnest durch die federnd gelagerten Elementbacken möglich.

Gemäß einer weiteren bevorzugten Ausgestaltung des im vorhergehenden Absatz beschriebenen Elementnests oder der Elementzufuhrvorrichtung weist das Elementnest als mechanische Anschlagausrichtung ein Konturstück mit einer Anlagekonturfläche angepasst an eine äußere Form eines Elektrodenstempels oder allgemein angepasst an einen Anschlag auf, wobei insbesondere eine Flächennormale der Anlagekonturfläche senkrecht zur Fügerichtung des Elektrodenstempels orientiert ist.

Mit dem Ziel, den sensorischen Erfassungsaufwand der Elementzuführung im Vergleich zu Lösungen im Stand der Technik zu reduzieren, weist das erfindungsgemäß bevorzugte Elementnest ein Konturstück auf, welches mit einer Anlagekonturfläche gegen den Elektrodenstempel oder gegen einen Anschlag einer Bereitstellungseinheit verfahrbar ist. Zwar erfordert auch diese Konzeption des Elementnests eine gewisse Abstimmung der Bewegung des Elementnests auf die Position des Elektrodenstempels, es ist aber nicht erforderlich, dass sensorisch permanent der Abstand zwischen sich bewegendem Elementnest und sich annäherndem Elektrodenstempel erfasst wird. Vielmehr dient die Anlagekonturfläche des Konturstücks des Elementnests dazu, dass das Elementnest seitlich gegen den Elektrodenstempel des Setz-Schweiß-Geräts verfahrbar ist. Sobald die Anlagekonturfläche am Elektrodenstempel seitlich anliegt, wird die weitere Zustellbewegung des Elementnests gestoppt.

Während das Konturstück mit der Anlagekonturfläche einerseits dazu dient, das Elementnest direkt am Elektrodenstempel zu positionieren, sorgt es ebenfalls dafür, dass das im Elementnest befindliche Schweißhilfsfügeteil passend zur Längsachse, vorzugsweise koaxial dazu, des Elektrodenstempels ausgerichtet wird. Denn für ein beschädigungsfreies Verfahren des Elementnests gegen den Elektrodenstempel mithilfe des Konturstücks ist es erforderlich, dass das Konturstück vorzugsweise in Richtung senkrecht zum Elektrodenstempel schwimmend gelagert ist. Auf diese Weise kann die Anlagekonturfläche verlässlich in Kontakt mit der seitlichen Fläche des Elektrodenstempels gebracht werden, ohne dass dabei der Elektrodenstempel beschädigt wird. Denn selbst wenn die lineare Zustellbewegung des Elementnests und somit des Konturstücks zum Elektrodenstempel eine Bewegung über die Außenfläche des Elektrodenstempels hinaus zulassen würde, kann das Konturstück aufgrund der schwimmenden Lagerung gegen eine bevorzugte Federkraft in seine Halterung im Elementnest eintauchen. Diese schwimmende Lagerung gibt somit vorzugsweise dem Konturstück eine zusätzliche Bewegungsfreiheit in einer Ebene, die annähernd senkrecht zur Fügerichtung des Setz-Schweiß-Geräts oder zur Längsachse des Elektrodenstempels angeordnet ist.

Um eine optimale und genaue Anlage des Konturstücks am Elektrodenstempel zu gewährleisten, ist die Anlagekonturfläche des Konturstücks an die äußere seitliche Form, vorzugsweise die radiale Außenseite des Elektrodenstempels, angepasst. Entsprechend erstreckt sich eine Flächennormale der Anlagekonturfläche senkrecht zur Fügerichtung oder zur Längsachse des Elektrodenstempels.

Gemäß einer weiteren bevorzugten Ausgestaltung des zuvor beschriebenen Elementnests sind die Elementbacken an dem Konturstück seitlich federnd befestigt und das Konturstück ist in mindestens zwei, vorzugsweise in drei, Richtungen innerhalb einer Ebene senkrecht zur Fügerichtung federnd auslenkbar angeordnet.

Es wurde bereits oben auf die bevorzugte Ausgestaltung bzw. Befestigung des Konturstücks im Elementnest hingewiesen. Diese schließt ein, dass das Konturstück in einer Ebene annähernd senkrecht zur Fügerichtung bzw. zur Längsachse des Elektrodenstempels schwimmend gelagert ist. Dazu kann das Konturstück für einen bestimmten Federweg in die Befestigung im Elementnest eintauchen und wieder durch die Federkraft heraus gedrückt werden. Da das Konturstück senkrecht auf den Elektrodenstempel zubewegt wird, ergibt diese federnde Lagerung des Konturstücks eine schwimmende Lagerung in einer Ebene annähernd senkrecht zur Fügerichtung und zur Längsachse des Elektrodenstempels. Da nun vorzugsweise die federnden Elementbacken ebenfalls am Konturstück befestigt sind, wirkt die schwimmende Lagerung des Konturstücks in gleicher Weise auch für die Elementbacken, beispielsweise bei der Aufnahme eines Schweißhilfsfügeteils oder bei der Übergabe des Schweißhilfsfügeteils an den Elektrodenstempel benachbart zur Fügestelle. Zudem ist es bevorzugt, dass das Konturstück ebenfalls seitlich federnd gehalten ist. Diese seitliche Federung ermöglicht eine zusätzliche Auslenkung des Konturstücks und damit der Elementbacken in der Ebene senkrecht zur Fügerichtung oder zur Längsachse des Elektrodenstempels. Seitlich bezieht sich dabei auf die Zustellrichtung des Elementnests zum Elektrodenstempel. Daraus folgt, dass die schwimmende Lagerung des Konturstücks und somit vorzugsweise auch der Elementbacken innerhalb der annähernd senkrechten Ebene zur Fügerichtung und zur Längsachse des Elektrodenstempels zwei Freiheitsgrade aufweist. Es ist gemäß einer weiteren bevorzugten Ausgestaltung ebenfalls möglich und bevorzugt, dass sich das Konturstück innerhalb der Ebene in drei Richtungen toleranzausgleichend bewegen kann.

Gemäß einer weiteren bevorzugten Ausgestaltung der erfindungsgemäßen Elementzufuhrvorrichtung, insbesondere in Kombination mit der Alternative 1 der erfindungsgemäßen Elementzufuhr, ist an dem bewegbaren Ende des Linearantriebs dem Elementnest in einer Zustellrichtung zu einem Elektrodenstempel des Schweiß-Setz-Geräts vorgelagert ein Niederhalter angeordnet, mit dem durch eine Anlage des Niederhalters an einem Bauteil und eine weitere Bewegung des Linearantriebs die Bewegung des Elementnests in die zweite Bewegungsrichtung unwandelbar ist.

Vorzugsweise wird die erfindungsgemäße Elementzufuhrvorrichtung mit nur einem Linearantrieb betrieben. Dieser Linearantrieb ist mit der bereits oben beschriebenen mechanischen richtungsändernden Kopplungskomponente ausgestattet, so dass selbst bei der nur einen Linearbewegung des Linearantriebs sich die Bewegungsrichtung des Elementnests gezielt in eine andere Bewegungsrichtung ändern lässt. Der bevorzugte Niederhalter setzt bei der Linearbewegung des Linearantriebs auf dem zu verbindenden Bauteil auf. Diese Bewegung wird einerseits dazu genutzt, das noch vorhandene Spaltmaß zwischen zumindest zwei miteinander zu verbindenden Bauteilen zu schließen. Denn der Niederhalter erbringt über die Linearbewegung und die Antriebskraft des Linearantriebs die dazu erforderlichen Schließkräfte auf die vorzugsweise stapelweise übereinander angeordneten Bauteile auf.

Erfährt der Niederhalter bevorzugt eine vorbestimme Gegenkraft beim Aufsetzen auf die miteinander zu verbindenden Bauteile, wird die mechanische richtungsändernde Kopplungskomponente zu einer Bewegung ausgelöst, die ein Versetzen des Elementnests in eine andere Bewegungsrichtung im Vergleich zum Linearantrieb auslöst. Diese zweite Bewegungsrichtung ist vorzugsweise ebenfalls eine Linearbewegung, die parallel zur Bauteiloberfläche verläuft. Denn vorzugsweise bleibt während dieser zweiten Linearbewegung des Elementnests der Niederhalter im Kontakt mit der Bauteiloberfläche. Gemäß unterschiedlicher bevorzugter Ausführungsformen der Erfindung wird der Niederhalter während der zweiten Linearbewegung nicht bewegt, insbesondere weil er am Schlitten der Linearführung befestigt ist, oder er wird zum Elektrodenstempel hin verschoben. Diese zweite Linearbewegung ausgelöst durch den auf dem Bauteil aufsitzenden Niederhalter stellt sicher, dass das Konturstück des Elementnests in Anlage mit dem Elektrodenstempel verfahrbar ist.

Vorzugsweise wird die Bewegung in die zweite Bewegungsrichtung, also das Auslösen der mechanischen richtungsändernden Kopplungskomponente, durch das Überwinden einer Federkraft innerhalb der mechanischen richtungsändernden Kopplungskomponente realisiert. Die Bewegung des Elementnests in der zweiten Bewegungsrichtung wird beendet, wenn das Schweißhilfsfügeteil unter dem Elektrodenstempel positioniert ist und gleichzeitig das Konturstück seitlich an dem Elektrodenstempel anliegt. Diese Position ist Voraussetzung dafür, dass der Elektrodenstempel das Schweißhilfsfügeteil an dem gegenüberliegenden Bauteil klemmt, so dass das Elementnest von dem Schweißhilfsfügeteil abgezogen bzw. wegbewegt werden kann.

Gemäß einer weiteren bevorzugten Ausgestaltung der erfindungsgemäßen Elementzufuhrvorrichtung ist das Elementnest entlang einer Linearführung geführt, die parallel zur ersten Bewegungsrichtung des Linearantriebs eine verzögerbare Bewegung des Elementnests gewährleistet, um die Bewegung des Elementnests von der ersten Bewegungsrichtung in die zweite Bewegungsrichtung zu ändern.

Gemäß einer bevorzugten Ausgestaltung vorliegender Erfindung wird das Elementnest auf einer Linearführung geführt. Dies ist beispielsweise mithilfe eines Schlittens möglich. Während benachbart zur Fügestelle das Aufsetzen des bevorzugten Niederhalters eine Richtungsänderung der Bewegung mithilfe der richtungsändernden Kopplungskomponente auslöst, wird dies beispielsweise benachbart zu einer Übergabeeinheit für ein Schweißhilfsfügeteil durch ein Abbremsen oder Blockieren des Elementnests auf der Linearführung realisiert. Denn vorzugsweise erzeugt ein Blockieren der weiteren geradlinigen Bewegung des Elementnests auf der Linearführung ein Auslösen einer Drehung der richtungsändernden Kopplungskomponente derart, dass das Elementnest wieder in die andere Bewegungsrichtung im Vergleich zum Linearantrieb bewegt wird. Sofern ein derartiges Blockieren benachbart zur Übergabeeinheit realisiert wird, wird das Elementnest gezielt einer Übergabeeinheit zugestellt, um dort ein Schweißhilfsfügeteil dem noch unbesetzten Elementnest zuführen zu können.

Vorliegende Erfindung offenbart zudem ein Elementnest eines Schweißhilfsfügeteils in einem Setz-Schweiß-Gerät, vorzugsweise in einer Elementzufuhrvorrichtung eines Setz-Schweiß-Geräts, wobei das Elementnest in einer Ebene annähernd senkrecht zu einer Fügerichtung des Schweiß-Setz-Geräts schwimmend gelagert ist, um über eine mechanische Anschlagausrichtung anliegend an einem Elektrodenstempel des Setz-Schweiß-Geräts in Fügerichtung unterhalb des Elektrodenstempels positionierbar zu sein.

Zu diesem Zweck weist das Elementnest vorzugsweise zwei einander gegenüberliegend angeordnete und relativ zueinander federnde Elementbacken auf, mit denen das Schweißhilfsfügeteil lösbar haltbar ist und die in einer Ebene senkrecht zur Fügerichtung schwimmend gelagert sind.

Gemäß einer weiteren bevorzugten Ausgestaltung des Elementnests weist das Elementnest als mechanische Anschlagausrichtung ein Konturstück mit einer Anlagekonturfläche angepasst eine äußere Form eines Elektrodenstempels auf, wobei insbesondere eine Flächennormale der Anlagekonturfläche senkrecht zur Fügerichtung orientiert ist.

Gemäß einer weiteren bevorzugten Ausgestaltung des erfindungsgemäßen Elementnests sind die Elementbacken des Elementnests an dem Konturstück seitlich federnd befestigt und das Konturstück ist in mindestens zwei, vorzugsweise in drei, Richtungen innerhalb einer Ebene senkrecht zur Fügerichtung federnd auslenkbar angeordnet.

Das oben zusammengefasste Elementnest weist die gleichen konstruktiven Eigenschaften auf, wie sie bereits oben in Kombination mit der Elementzufuhrvorrichtung beschrieben worden sind. Es ist aber ebenfalls bevorzugt, dieses Elementnest auch ohne die oben beschriebene Elementzufuhrvorrichtung mit einem Setz-Schweiß-Gerät bekannter Bauart zu kombinieren, um dessen konstruktive Vorzüge während der Zufuhr eines Schweißhilfsfügeteils zum Elektrodenstempel auszunutzen. Zur funktionellen Erläuterung der einzelnen konstruktiven Ausgestaltungen des Elementnests wird daher auf die bereits oben gelieferte Beschreibung verwiesen.

Vorliegende Erfindung offenbart zudem ein Setz-Schweiß-Gerät für ein Schweißhilfsfügeteil mit einem Kopf und einem Schaft in Kombination mit der oben beschriebenen Elementzufuhrvorrichtung oder in Kombination mit dem oben beschriebenen Elementnest.

Zudem offenbart vorliegende Erfindung einen Nachrüstsatz einer Elementzufuhrvorrichtung gemäß einer der oben beschriebenen Ausgestaltungen oder einen Nachrüstsatz für das oben beschriebene Elementnest, der mit einem Setz-Schweiß-Gerät verbindbar ist.

Die oben beschriebene Elementzufuhrvorrichtung gemäß vorliegender Erfindung sowie das auch einzeln beschriebene Elementnest sind jeweils mit bestehenden Setz-Schweiß-Geräten kombinierbar, um die dortige Zufuhr von Schweißhilfsfügeteilen zu verbessern. Daher stellt die Elementzufuhrvorrichtung gemäß den oben beschriebenen bevorzugten Ausgestaltungen sowie das Elementnest gemäß den oben beschriebenen bevorzugten Ausgestaltungen einen Nachrüstsatz für derartige bestehende Setz-Schweiß-Geräte dar.

Vorliegende Erfindung offenbart zudem ein Zufuhrverfahren eines Schweißhilfsfügeteils zu einer Fügestelle in einem Setz-Schweiß-Gerät mit der oben beschriebenen Elementzufuhrvorrichtung. Dieses Zufuhrverfahren weist die folgenden Schritte auf: Zustellen des besetzten Elementnests mit der Linearbewegung des Linearantriebs in der ersten Bewegungsrichtung zumindest zu einer Fügestelle des Schweißhilfsfügeteils, wobei das Schweißhilfsfügeteil von zwei zueinander gegenüberliegend angeordneten und relativ zueinander federnden Elementbacken des Elementnests lösbar gehalten wird, Aufsetzen eines am Linearantrieb befestigten Niederhalters auf einem Bauteil und danach Bewegen des Elementnests über die mechanische richtungsändernde Kopplungskomponente in die zweite Bewegungsrichtung zum Positionieren an der Fügestelle durch ein weiteres Bewegen des Linearantriebs in der ersten Bewegungsrichtung.

Gemäß einer weiteren bevorzugten Ausgestaltung des oben genannten Zufuhrverfahrens werden die weiteren Schritte ausgeführt: Bewegen des Elementnests auf Anschlag an den Elektrodenstempel, wodurch die mechanische Anschlagausrichtung des Elementnests seitlich am Elektrodenstempel anliegt und das Schweißhilfsfügeteil gehalten zwischen den Elementbacken in Fügerichtung unterhalb des Elektrodenstempels positioniert ist, Klemmen des Schweißhilfsfügeteils durch den Elektrodenstempel in Fügerichtung gegen das benachbarte Bauteil an der Fügestelle, Entfernen des Elementnests vom Elektrodenstempel und dadurch Lösen des Schweißhilfsfügeteils aus dem federnden Halt der Elementbacken.

Gemäß einer weiteren bevorzugten Ausgestaltung des Zufuhrverfahrens und auch der oben beschriebenen Elementzufuhrvorrichtung erfolgt ein Blockieren einer Bewegung des Elementnests parallel zur ersten Bewegungsrichtung des Linearantriebs benachbart zu einer Übergabeeinheit für ein Schweißhilfsfügeteil und dadurch ein Bewegen des Elementnests über die mechanische richtungsändernde Kopplungskomponente in die zweite Bewegungsrichtung in Richtung der Übergabeeinheit zum Positionieren des Elementnests an der Übergabeeinheit durch ein weiteres Bewegen des Linearantriebs in der ersten Bewegungsrichtung.

Durch die bevorzugte Kombination des Linearantriebs mit einer parallel dazu laufenden Linearführung für das Elementnest ist es möglich und bevorzugt, auch an einer Übergabeeinheit die mechanische richtungsändernde Kopplungskomponente für ein Umschalten von der ersten Bewegungsrichtung des Linearantriebs auf die zweite Bewegungsrichtung zu nutzen. Auf diese Weise ist nicht nur die oben bereits beschriebene gezielte Zufuhr des Schweißhilfsfügeteils zu einer Fügestelle möglich, sondern ebenfalls auch die gezielte Zufuhr des noch freien Elementnests zu der Übergabeeinheit. Sobald diese Positionierung benachbart zur Übergabeeinheit realisiert worden ist, kann von der Übergabeeinheit ein Schweißhilfsfügeteil dem noch freien Elementnest zugeführt werden. Insofern erzeugt bevorzugt das Blockieren der Bewegung des Elementnests entlang der Linearführung einen ähnlichen Blockier- und Umschalteffekt, wie das Aufsetzen des Niederhalters auf dem zu fügenden Bauteil (siehe oben). Denn durch das Abbremsen des Elementnests, insbesondere durch das Blockieren der weiteren linearen Bewegung des Elementnests, wird eine Kraft und Bewegung auf die richtungsändernde Kopplungsvorrichtung durch den sich weiterbewegenden Linearantrieb ausgeübt. Nach bevorzugter Überwindung einer Schwellenfederkraft bewegt der Linearantrieb die richtungsändernde Kopplungskomponente um einen festen Drehpunkt, was zu einer Bewegung des Elementnests in eine zweite Bewegungsrichtung führt. Diese zweite Bewegungsrichtung ist, wie es oben bereits erläutert worden ist, unterschiedlich von der ersten Bewegungsrichtung des Linearantriebs. Unterschiedlich bedeutet in diesem Zusammenhang, dass die erste und die zweite Bewegungsrichtung in einem Winkel zueinander ausgerichtet sind, der ungleich 0° und ungleich 180° ist. Das bedeutet, dass durch die richtungsändernde Kopplungskomponente weder eine Bewegung parallel zum Linearantrieb noch antiparallel zum Linearantrieb ausgelöst wird.

Gemäß einer weiteren bevorzugten Ausgestaltung des Zufuhrverfahrens wird der weitere Schritt ausgeführt: Bewegen des Elementnests auf Anschlag an die Übergabeeinheit, wodurch die mechanische Anschlagausrichtung des Elementnests an einem Anschlag der Übergabeeinheit anliegt und die beiden relativ zueinander federnd angeordneten Elementbacken in einer Übergabeposition der Übergabeeinheit positioniert sind, und danach Bewegen eines Schweißhilfsfügeteils aus der Übergabeeinheit zwischen die Elementbacken des Elementnests, so dass das Schweißhilfsfügeteil dort lösbar gehalten ist.

Während die richtungsändernde Kopplungskomponente die Zustellung des besetzten Elementnests zum Elektrodenstempel realisiert, ist sie in gleicher Weise nutzbar, um das noch freie Elementnest der Übergabeeinheit zuzustellen. Zudem ist das erfindungsgemäß bevorzugte Konturstück in seiner schwimmenden Lagerung am Elementnest dafür geeignet, um zerstörungsfrei das Elementnest in unmittelbarer Nähe der Übergabeeinheit zuzustellen und dort für eine Übergabe des Schweißhilfsfügeteils zu positionieren. Insofern lassen sich die Bewegungseigenschaften der Elementzufuhr analog an der Übergabeeinheit nutzen, wie sie bereits in Kombination mit dem Elektrodenstempel bei der Zustellung des Schweißhilfsfügeteils zur Fügestelle verwendet worden sind.

Gemäß einer weiteren bevorzugten Ausgestaltung des Zufuhrverfahrens erfolgt bei blockierter Bewegung des Elementnests parallel zur ersten Bewegungsrichtung, also durch eine geeignete Blockade des Elementnests auf der Linearführung parallel zum Linearantrieb, ein Bewegen des Linearantriebs entgegen der ersten Bewegungsrichtung, wodurch das Elementnest über die mechanische richtungsändernde Kopplungskomponente entgegen der zweiten Bewegungsrichtung in eine Ausgangsposition zurückgestellt wird, und danach ein Zustellen des besetzten Elementnests mit der Linearbewegung des Linearantriebs in der ersten Bewegungsrichtung zur Fügestelle.

Vorliegende Erfindung offenbart zudem ein weiteres Zufuhrverfahren eines Schweißhilfsfügeteils zu einer Fügestelle in einem Setz-Schweiß-Gerät in Kombination mit den oben beschriebenen Ausgestaltungen des Elementnests. Dieses Zufuhrverfahren weist die folgenden Schritte auf: Zustellen des besetzten Elementnests mit mindestens einem Antrieb zu einer Fügestelle benachbart zu einem Elektrodenstempel, wobei das Schweißhilfsfügeteil von zwei einander gegenüberliegend angeordneten und relativ zueinander federnden Elementbacken des Elementnests lösbar gehalten wird, Bewegen des Elementnests auf Anschlag an den Elektrodenstempel, wodurch die mechanische Anschlagausrichtung des Elementnests seitlich am Elektrodenstempel anliegt und das Schweißhilfsfügeteil gehalten zwischen den Elementbacken in Fügerichtung unterhalb des Elektrodenstempels positioniert ist, Klemmen des Schweißhilfsfügeteils durch den Elektrodenstempel in Fügerichtung gegen das benachbarte Bauteil an der Fügestelle, Entfernen des Elementnests vom Elektrodenstempel und dadurch Lösen des Schweißhilfsfügeteils aus dem federnden Halt der Elementbacken.

Gemäß einer weiteren Ausgestaltung dieses Zufuhrverfahrens erfolgt bevorzugt ein Ausgleichen von Toleranzen in einer Ebene annähernd senkrecht zur Fügerichtung zwischen dem Elektrodenstempel und dem Elementnest beim Bewegen des Elementnests auf Anschlag am Elektrodenstempel mithilfe der schwimmenden Lagerung des Elementnests in Bezug auf eine Befestigung.

### 4. Kurze Beschreibung der begleitenden Zeichnung

Die bevorzugten Ausgestaltungen vorliegende Erfindung werden unter Bezugnahme auf die begleitende Zeichnung näher erläutert. Es zeigen:
- Figur 1: eine perspektivische Seitenansicht eines bevorzugten Setz-Schweiß-Geräts mit einer ebenfalls bevorzugten Ausführungsform einer Elementzufuhrvorrichtung,
- Figur 2: eine Ausschnittsvergrößerung aus Figur 1,
- Figur 3: eine vergrößerte Darstellung einer bevorzugten Ausführungsform eines Ausschnitts aus der Elementzufuhrvorrichtung,
- Figur 4: eine vergrößerte Darstellung der bevorzugten Elementzufuhrvorrichtung mit Elementnest am bewegten Ende des Linearantriebs,
- Figur 5: eine vergrößerte Darstellung des bewegten Endes des Linearantriebs in Kombination mit dem verbundenen Elementnest an einer bevorzugten Übergabeeinheit des Setz-Schweiß-Geräts,
- Figur 6: eine vergrößerte Darstellung einer bevorzugten Ausführungsform des Elementnests,
- Figur 7: eine weitere bevorzugte Ansicht des Elementnests gemäß Figur 6 in Verbindung mit dem bewegten Ende des Linearantriebs,
- Figur 8: ein bevorzugtes Aufsetzen des Elementnests mit Niederhalter auf einem Bauteil benachbart zu einer Fügestelle,
- Figur 9: eine weitere Darstellung der Zufuhr eines Schweißhilfsfügeteils zu einer Fügestelle mithilfe des Elementnests und des bewegten Endes des Linearantriebs,
- Figur 10: eine schematische Darstellung des bevorzugten Zusammenwirkens eines bevorzugten Konturstücks des Elementnests mit dem Elektrodenstempel während der Zustellung eines Schweißhilfsfügeteils zu einer Fügestelle,
- Figur 11: eine vergrößerte Seitenansicht der bevorzugten Anordnung und Orientierung des Schweißhilfsfügeteils unterhalb des Elektrodenstempels mithilfe der Zusammenwirkung zwischen Elektrodenstempel sowie Konturstück des Elementnests,
- Figur 12: eine bevorzugte schematische Darstellung einer Lösebewegung des Elementnests von dem Schweißhilfsfügeteil, welches zwischen Bauteil und Elektrodenstempel geklemmt ist,
- Figur 13: ein Flussdiagramm einer bevorzugten Ausführungsform eines Zufuhrverfahrens für ein Schweißhilfsfügeteil zu einer Fügestelle und
- Figur 14: eine weitere bevorzugte Ausführungsform des bevorzugten Zufuhrverfahrens eines Schweißhilfsfügeteils zu einer Fügestelle.

### 5. Detaillierte Beschreibung der bevorzugten Ausführungsformen vorliegender Erfindung

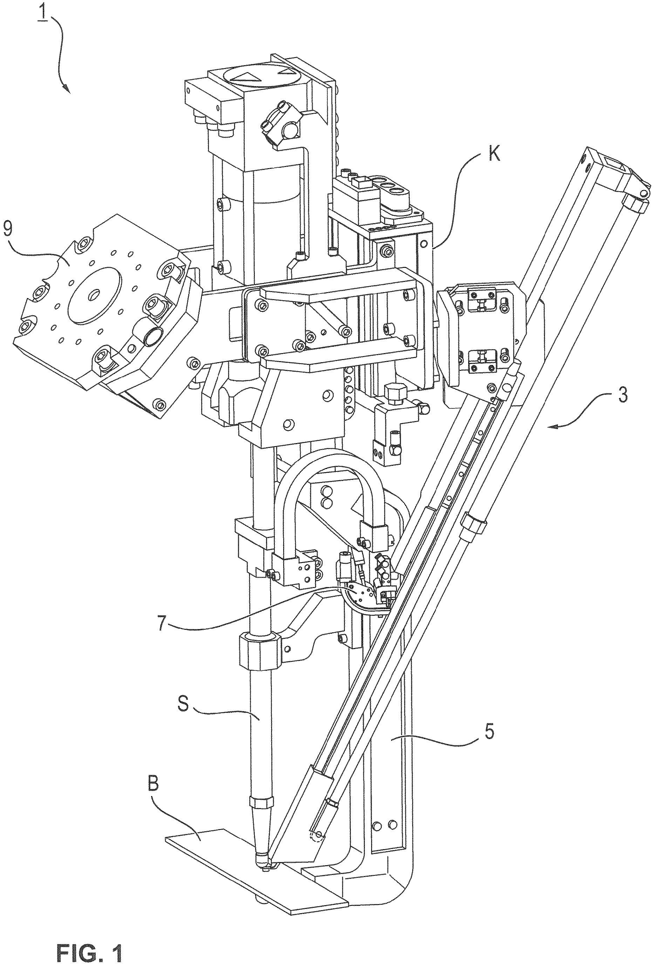

Figur 1 zeigt eine bevorzugte Ausführungsform eines Schweiß-Setz-Geräts 1 mit einer Elementzufuhrvorrichtung 3. Die Elementzufuhrvorrichtung 3 ist benachbart zum hinteren Teil eines C-Bügels 5 angeordnet. Damit wird die Störkontur des Setz-Schweiß-Geräts 1 benachbart zu den miteinander zu verbindenden Bauteilen B verringert. Zudem umfasst das Setz-Schweiß-Gerät 1 bevorzugt eine Bereitstellungseinheit 7, der Schweißhilfsfügeteile zugeführt werden. Von dort werden die Schweißhilfsfügeteile bevorzugt einzeln an die Elementzufuhrvorrichtung 3 überführt, wie unten näher erläutert ist. Außerdem umfasst das Setz-Schweiß-Gerät 1 eine bekannte Kopplungseinheit 9 zum Verbinden mit einem Roboter (nicht gezeigt).

Die Elementzufuhrvorrichtung 3 ist vorzugsweise über mindestens ein Klemmstück K oder Shim mit dem Setz-Schweiß-Gerät 1 verbunden. Das Klemmstück K bildet die Grundlage, um die Elementzufuhrvorrichtung 3 mit Setz-Schweiß-Geräten 1 unterschiedlicher Bauart und Größe zu verbinden. Zudem bildet es die Grundlage dafür, die Elementzufuhrvorrichtung 3 als Nachrüstsatz (siehe unten) anzubieten und mit vorhandenen Setz-Schweiß-Geräten 1 zu kombinieren.

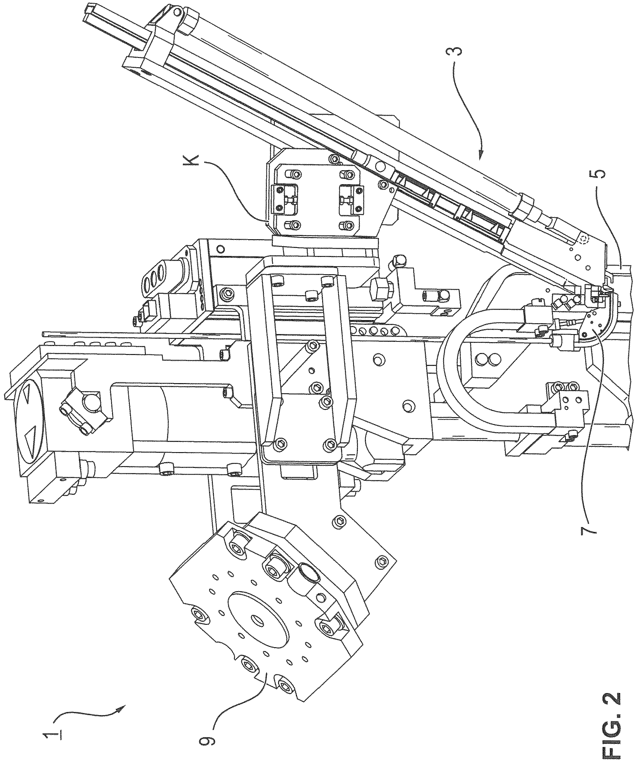

Das Setz-Schweiß-Gerät 1 umfasst neben dem C-Rahmen, der eine Gegenelektrode E stützt, einen Elektrodenstempel S oder allgemein eine Schweißelektrode. Die beiden Bezeichnungen Elektrodenstempel S und Schweißelektrode beziehen sich auf den gleichen Teil des Setz-Schweiß-Geräts 1. Dieser Begriff wird gelegentlich in Abhängigkeit von der zu verwendenden Setzkraft für das Schweißhilfsfügeteil unterschiedlich eingesetzt, soll hier aber gleichbedeutend verwendet werden. Somit dient der Elektrodenstempel S als Element zum Aufbringen einer mechanischen Setzkraft auf das Schweißhilfsfügeteil und als Elektrode zum Aufbringen einer elektrischen Last auf das Schweißhilfsfügeteil. In Figur 2 ist das Setz-Schweiß-Gerät 1 noch einmal vergrößert dargestellt.

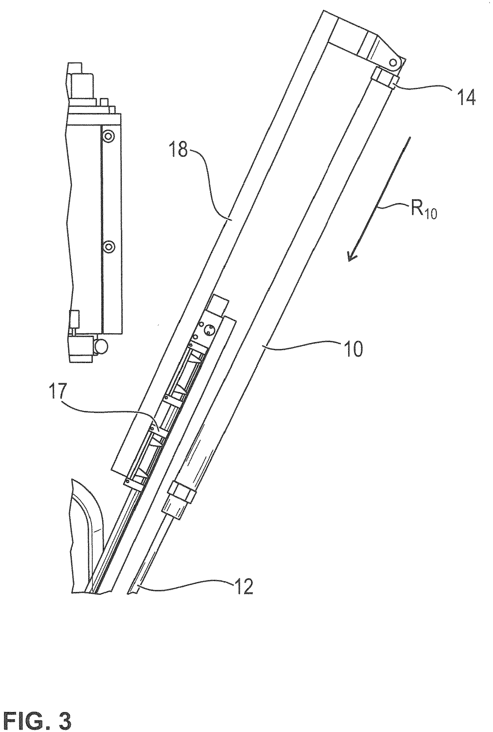

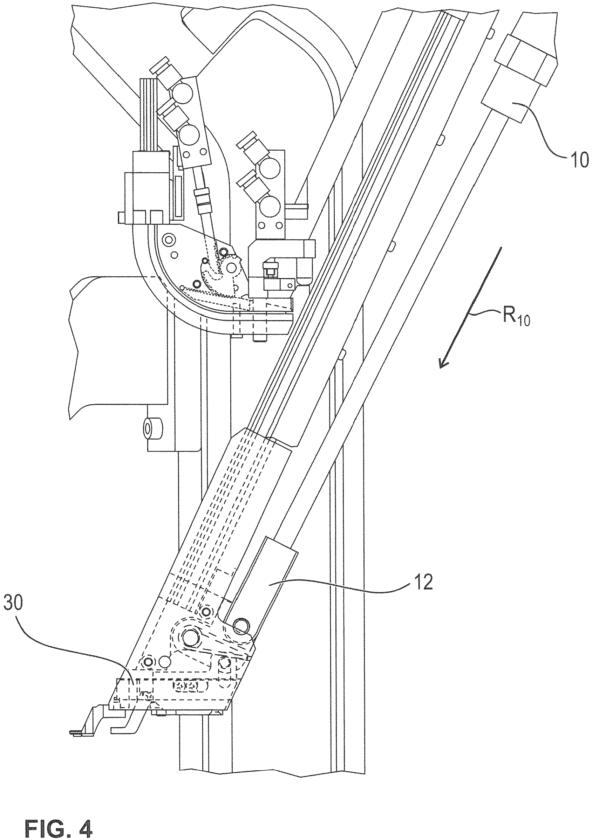

Eine bevorzugte Ausführungsform der Elementzufuhrvorrichtung 3 ist in größerem Detail in den Figuren 3 und 4 dargestellt. Die Elementzufuhrvorrichtung 3 umfasst mindestens einen Linearantrieb 10, mit einem bewegbaren Ende 12 und einem festen Ende 14. Der Linearantrieb 10 ist gemäß unterschiedlicher bevorzugter Ausführungsformen vorliegender Erfindung ein Pneumatikzylinder, ein Hydraulikzylinder oder ein Servomotor oder allgemein jedes gängige Stellglied, mit dem gezielt eine Längenänderung erzeugt werden kann. Über seine Längenänderung bewegt der Linearantrieb 10 das bewegbare Ende 12 in einer ersten Bewegungsrichtung R₁₀ oder entgegen dazu. Dies ist durch den Pfeil R₁₀ in den Figuren 3 und 4 veranschaulicht.

Am bewegten Ende 12 des Linearantriebs 10 ist ein Elementnest 30 befestigt. Das Elementnest 30 dient der Übernahme, dem Transport und der Übergabe eines einzelnen Schweißhilfsfügeteils 2 an einer Fügestelle (siehe unten).

Vorzugsweise ist das Elementnest 30 parallel zum Linearantrieb 10 an einer Linearführung 16 geführt. Dazu ist das Elementnest 30 vorzugsweise an einem Schlitten 17 befestigt, der auf einer Schiene 18 läuft. Erfindungsgemäß bevorzugt kann der Schlitten 17 in seiner Bewegung auf der Schiene 18 gebremst und/oder blockiert werden. Diese Gestaltung der Bewegung des Elementnests 30 mithilfe der Linearführung 16 und des Schlittens 17 bildet eine bevorzugte Grundlage zur Realisierung der Funktionalität der Elementzufuhrvorrichtung 3.

Erfindungsgemäß bevorzugt wird das unten näher beschriebene Elementnest 30 mit nur einem Linearantrieb 10 zur Zufuhr eines Schweißhilfsfügeteils 2 zu Fügestelle bewegt. Dies ermöglicht in bevorzugter Kombination mit der Linearführung 16 ein verlässliches Erreichen der Fügestelle und der Übergabeeinheit 7 für Schweißhilfsfügeteile 2. Zudem ist durch den gezielten Einsatz von nur einem Linearantrieb 10 der Aufwand für Sensorik und Antriebstechnik im Vergleich zu bekannten Setz-Schweiß-Geräten reduziert.

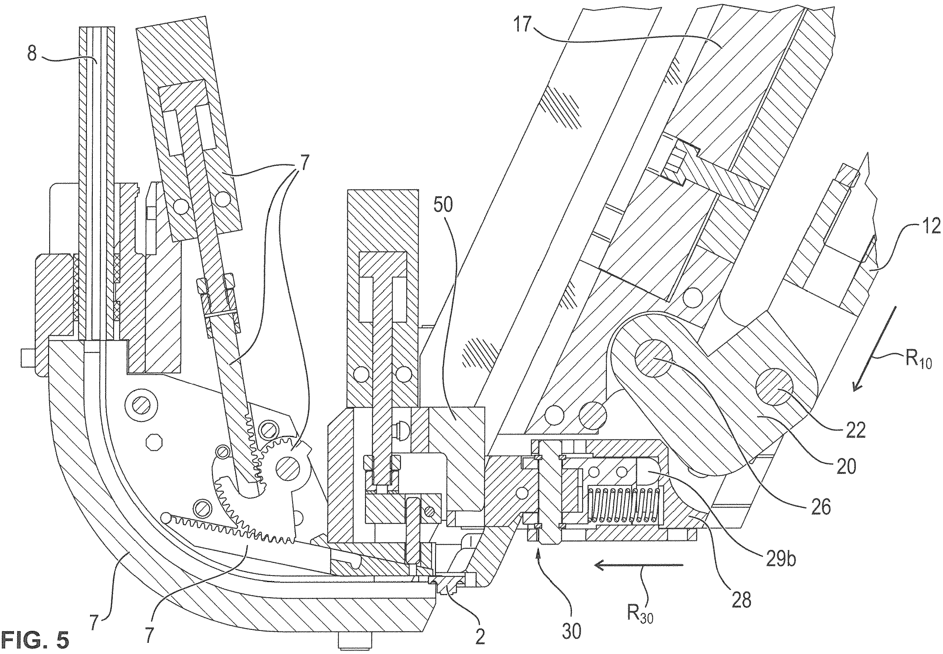

Die Elementzufuhrvorrichtung 3 in der bevorzugten Konfiguration mit nur einem Linearantrieb 10 ist vergrößert in Figur 5 dargestellt. In der bevorzugten Bereitstellungseinheit 7 wird gemäß einer Ausgestaltung das Schweißhilfsfügeteil 2 über einen Profilschlauch 8 einer Übergabeposition zugeblasen. Ein bevorzugtes Sperrelement verhindert, dass das Schweißhilfsfügeteil 2 die Bereitstellungseinheit 7 unkontrolliert verlässt. Sobald das Elementnest 30 gemäß Figur 5 angrenzend an die Bereitstellungseinheit 7 angeordnet ist, wird das Schweißhilfsfügeteil 2 mithilfe einer Mehrzahl von zusammenwirkenden Hebeln und einem betätigenden Stellglied 6 in das Elementnest 30 geschoben.

Um das Elementnest 30 benachbart zur Übergabeeinheit 7 anzuordnen, ist das bewegbare Ende 12 des Linearantriebs 10 bevorzugt über eine mechanische richtungsändernde Kopplungskomponente 20 mit dem Elementnest 30 verbunden. Die Kopplungskomponente 20 ist eine kniehebelähnliche Konstruktion, die jeweils eine Befestigung 22, 24, vorzugsweise jeweils ein Befestigungszapfen, für das bewegte Ende 12 des Linearantriebs 10 und für das Elementnest 30 bereitstellt. Vorzugsweise wird die Kopplungskomponente 20 durch einen drehbar angeordneten Kopplungshebel mit den mehreren Befestigungspunkten gebildet.

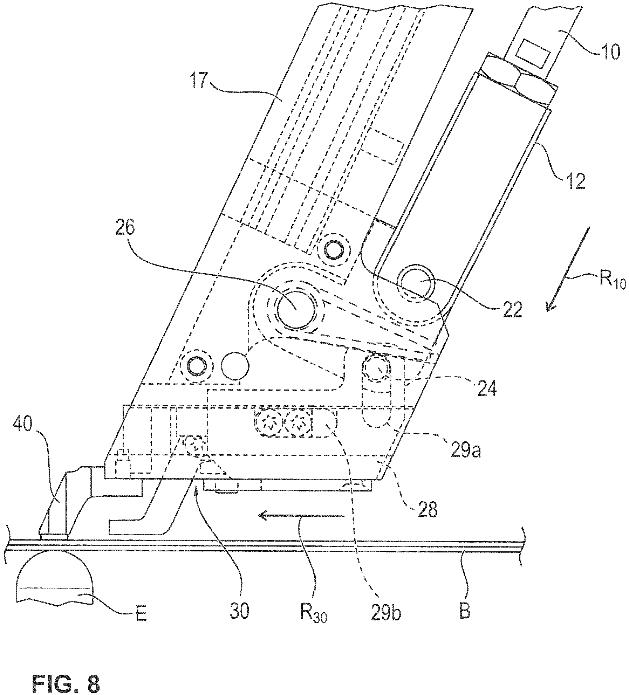

Die Befestigungszapfen 22, 24 erlauben eine Drehung der miteinander verbundenen Komponenten relativ zueinander. Zudem ist es bevorzugt, dass die beiden Befestigungszapfen 22, 24 (siehe Figuren 5 und 8) auf einer gemeinsamen Linie liegen. Seitlich von dieser gedachten Verbindungslinie zwischen den Befestigungszapfen 22, 24 ist ein weiterer Befestigungszapfen 26 am Schlitten 17 der Linearführung 16 vorgesehen. Der Befestigungszapfen 26 gewährleistet ein Drehen der Kopplungskomponente 20 um die Befestigung 26.

Vorzugsweise ist die Kopplungskomponente 20 gegen das bewegte Ende 12 des Linearantriebs 10 federvorgespannt. Das bedeutet, dass erst bei Erreichen einer Schwellenkraft durch das bewegte Ende 12 des Linearantriebs 10 während der Bewegung in die erste Bewegungsrichtung R₁₀ die Kopplungskomponente 20 eine Drehung um die Befestigung 26 beginnt. Im Vergleich der Figuren 5 und 8 wird die Drehbewegung der Kopplungskomponente 20 deutlich. Zum Auslösen dieser Drehbewegung der Kopplungskomponente 20 um die Befestigung 26 wird vorzugsweise die Bewegung des Schlittens 17 der Linearführung 16 blockiert. Dies führt dazu, dass das bewegte Ende 12 über die Befestigung 22 gegen die Kopplungskomponente 20 drückt, um die Kopplungskomponente 20 nach Erreichen der Schwellenkraft um die Befestigung 26 zu drehen. Da vorzugsweise der Befestigungszapfen 24 in einem ersten Langloch 29A eines Verbindungsblocks 28 zwischen der Kopplungskomponente 20 und dem Elementnest 30 geführt ist, erzeugt die Drehung der Kopplungskomponente 20 in Richtung des Elementnests 30 eine Bewegung oder Verschiebung des Elementnests 30 von dem bewegten Ende 12 weg in Richtung R₃₀ (siehe Pfeil in den Figuren 5 und 8).

Die Bewegung oder Verschiebung des Elementnests 30 in Richtung R₃₀ erfolgt in einer zweiten Bewegungsrichtung, die sich von der ersten Bewegungsrichtung R₁₀ des Linearantriebs 10 unterscheidet. Erfindungsgemäß bevorzugt wird diese Bewegung in die zweite Bewegungsrichtung R₃₀ durch den Linearantrieb 10 bewirkt, ohne dass ein zusätzlicher Antrieb in der zweiten Bewegungsrichtung R₃₀ erforderlich ist.

Während die Drehung der Kopplungskomponente 20 mithilfe des Verbindungsblocks 28 und des ersten Langlochs 29A auf das Elementnest 30 übertragen wird, stellt ein zweites Langloch 29B die Bewegungsrichtung R₃₀ des Verbindungsblocks 28 und somit des Elementnests 30 sicher. Zu diesem Zweck greift mindestens ein Führungsstift 32 des Elementnests 30 in das zweite Langloch 29B ein und lässt nur eine Bewegung des Elementnests 30 in Verlaufsrichtung des zweiten Langenlochs 29B zu.

Die beiden Bewegungsrichtungen R₁₀ und R₃₀ zeichnen sich bevorzugt dadurch aus, dass sie weder parallel noch antiparallel zueinander ausgerichtet sind. Vielmehr schließen die beiden Bewegungsrichtungen R₁₀ und R₃₀ einen Winkel ungleich 0° und ungleich 180° ein.

Bei der Zustellung des Elementnests 30 zur Bereitstellungseinheit 7 in Richtung R₃₀ muss der Schlitten 17 abgebremst werden, um die Drehung der Kopplungskomponente 20 um die Befestigung 26, insbesondere einen Befestigungsstift oder Befestigungszapfen, auszulösen. Dazu bewegt sich das bewegliche Ende 12 des Linearantriebs 10 in Richtung R₁₀. Nach Übernahme eines Schweißhilfsfügeteils 2 durch das Elementnest 30 bewegt sich das Ende 12 des Linearantriebs 10 bevorzugt entgegen der Richtung R₁₀ (siehe Figur 5). Entsprechend führt die Kopplungskomponente 20 eine Drehung um den Befestigungszapfen 26 in entgegengesetzter Richtung zu R₃₀ aus. Das Elementnest 30 wird wieder in seine Ausgangsposition benachbart zu dem bewegten Ende 12 des Linearantriebs 10 zurück bewegt, wie es in Figur 4 gezeigt ist.

Eine analoge Bewegung des Elementnests 30 wird für die Zufuhr des Schweißhilfsfügeteils 2 zur Fügestelle in Fügerichtung R_{F} unterhalb des Elektrodenstempels S genutzt. Wie man anhand von Figur 8 erkennen kann, stellt der Linearantrieb 10 das Elementnest 30 in der Ausgangsposition in Richtung R₁₀ auf die Bauteile B zu. In der Ausgangsposition des Elementnests 30 ist die Kopplungskomponente 20 noch bevorzugt federvorgespannt und wurde noch nicht in Richtung des Elementnests 30 um den Befestigungszapfen 26 gedreht.

Vorzugsweise ist benachbart zum Elementnest 30 und in Richtung R₁₀ des Elementnests 30 vorgelagert ein Niederhalter 40 angeordnet. Ebenfalls bevorzugt ist der Niederhalter 40 an dem Schlitten 17 befestigt, der durch die Linearführung 16 geführt ist. Aufgrund der Bewegung des Linearantriebs 10 in Richtung R₁₀ drückt der Niederhalter 40 auf die Bauteile B und blockiert eine weitere Bewegung des Schlittens 17 und des Elementnests 30 in Richtung R₁₀. Die durch den Niederhalter 40 auf die Bauteile B aufgebrachte Kraft reduziert oder beseitigt ein vorhandenes Spaltmaß zwischen den Bauteilen B und bereitet so das Herstellen einer Fügeverbindung vor.

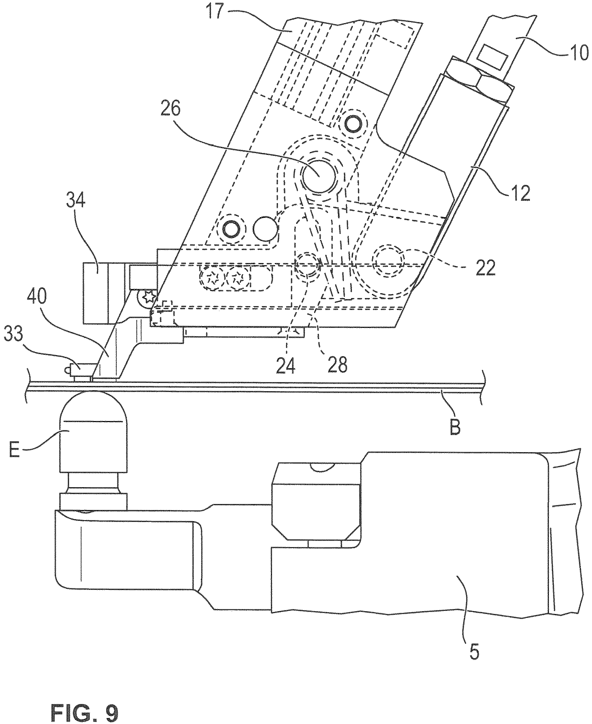

Das Blockieren der weiteren Bewegung des Schlittens 17 durch den Niederhalter 40 entspricht dem Blockieren oder Abbremsen des Schlittens 17 an der Bereitstellungseinheit 7 (siehe oben). Wird der Linearantrieb 10 auch nach dem Aufsetzen des Niederhalters 40 in Richtung R₁₀ verlängert, also bewegt sich das Ende 12 weiter in Richtung R₁₀, überwindet der Linearantrieb 10 die Schwellenkraft der Kopplungskomponente 20 und beginnt die Drehung der Kopplungskomponente 20 um den Befestigungszapfen 26. Auf diese Weise wird das Elementnest 30 in Richtung Fügestelle oberhalb einer unteren Elektrode E versetzt (siehe Figur 9).

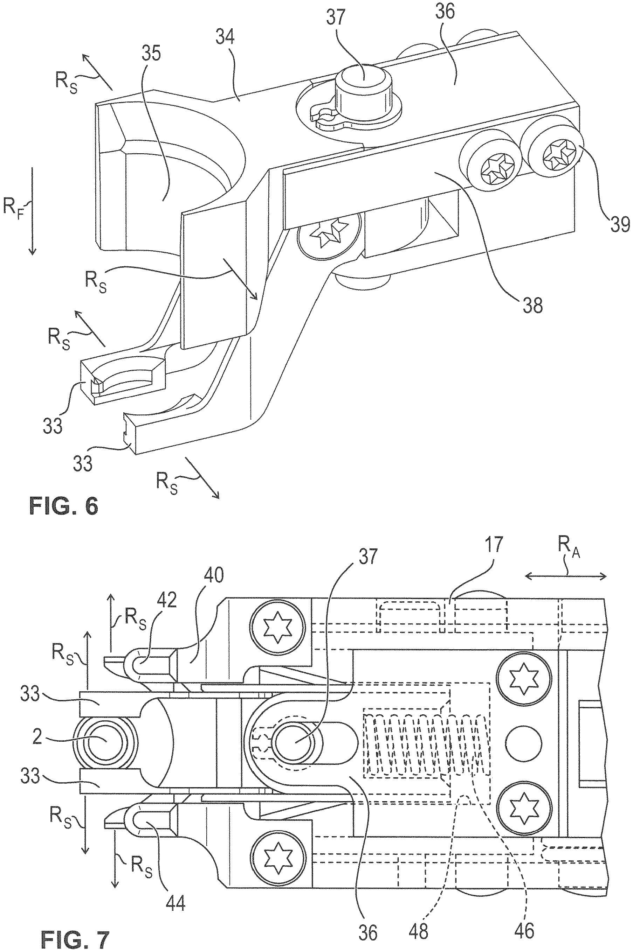

Vorzugsweise ist der Niederhalter 40 mit zwei Armen 42, 44 gabelförmig ausgebildet. Zwischen den Armen 42, 44 ist ein Freiraum, in den das Elementnest 30 über die Drehung der Kopplungskomponente 20 das Schweißhilfsfügeteil 2 bewegt (siehe Figuren 9 und 7).

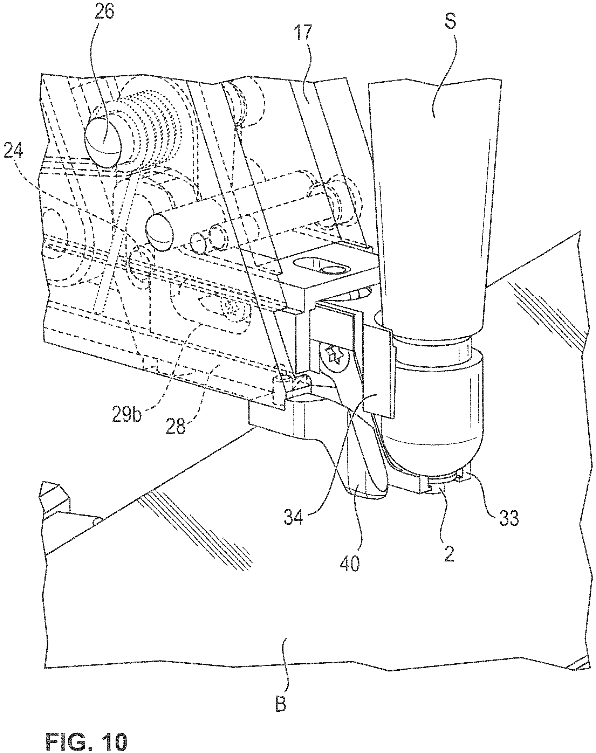

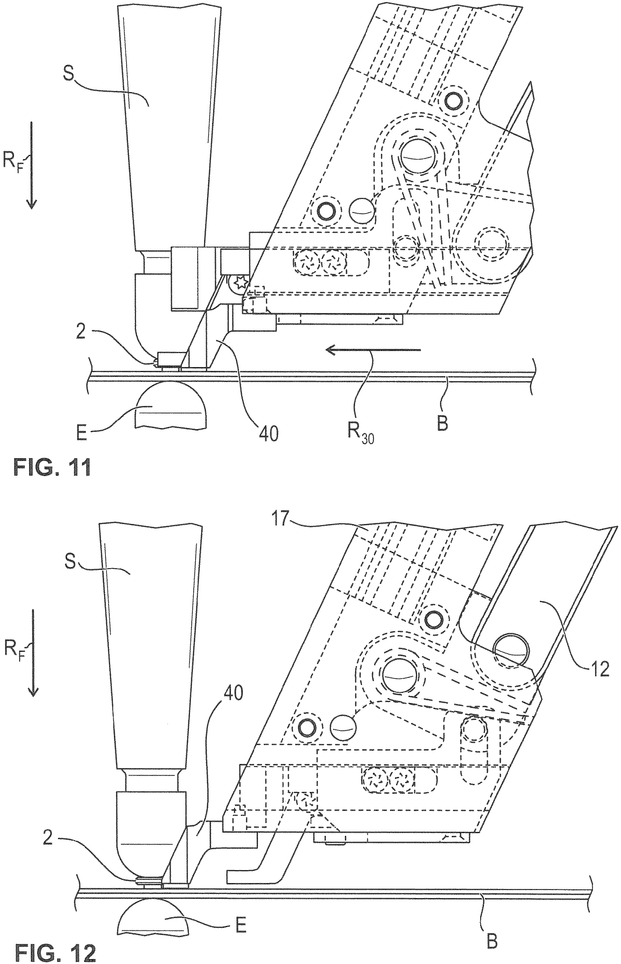

Anschließend wird das Schweißhilfsfügeteil 2 durch den Elektrodenstempel S am Bauteil 2 geklemmt und dadurch gehalten (siehe Figuren 10 und 11).

Bevor das Schweißhilfsfügeteil 2 in die Bauteile B gefügt wird, verkürzt sich der Linearantrieb 10 und bewegt das Ende 12 entgegen der Richtung R₁₀. Dadurch wird die Kopplungskomponente 20 in ihre Ausgangsposition zurück gedreht und das Elementnest 30 vom Elektrodenstempel S entfernt, wie es im Vergleich der Figuren 11 und 12 zu erkennen ist.

Da der Niederhalter 40 durch den Elektrodenstempel S nicht festgehalten wird, entfernt eine weitere Bewegung des Endes 12 das Elementnest 30 von dem Bauteil B. Entsprechend kann nun der Schweiß-Setz-Prozess zwischen dem Elektrodenstempel S und der Gegenelektrode E mit dem zwischengeordneten Schweißhilfsfügeteil 2 durchgeführt werden.

Um das Schweißhilfsfügeteil 2 optimal an der Bereitstellungseinheit in dem Elementnest 30 aufzunehmen und unterhalb des Elektrodenstempels S zu positionieren, weist das Elementnest ein Paar federnde Elementbacken 33 und ein Konturstück 34 auf. Die Elementbacken 33 sind relativ zueinander federnd ausgebildet. Dazu bestehen die Elementbacken 33 vorzugsweise aus einem Federblech. Da die Elementbacken 33 einander gegenüberliegen, bilden sie eine federnde zangenähnliche Anordnung, um das Schweißhilfsfügeteil 2 zwischen sich lösbar zu halten. Zur Unterstützung des Halts des Schweißhilfsfügeteils 2 zwischen den Elementbacken 33 weisen die aufeinander gerichteten Innenseiten der Elementbacken 33 eine an die Form des Schweißhilfsfügeteils 2 angepasste Innenkontur auf.

Gemäß einer bevorzugten Ausgestaltung des Elementnests 30 sind die Elementbacken 30 in einer Ebene annähernd senkrecht zur Fügerichtung R_{F} schwimmend gelagert. Schwimmend gelagert bedeutet, dass die Elementbacken 33 gemeinsam in Richtung Rₛ gemäß Figur 6 ausweichen können, um mögliche Ausrichtungstoleranzen beispielsweise zum Elektrodenstempel S auszugleichen.

Zu diesem Zweck sind die Elementbacken 33 mit dem Konturstück 34 verbunden. Das Konturstück 34 weist eine Anlagekonturfläche 35 auf, die unten näher diskutiert ist. Das Konturstück 34 ist in einem Kopplungsblock 36 über einen Haltestift 37 schwenkbar gehalten. Der Haltestift 37 durchläuft annähernd parallel zur Fügerichtung R_{F} eine gabelähnliche Freimachung. Innerhalb der gabelähnlichen Freimachung ist das Konturstück 34 mit einer Halteöffnung angeordnet. Entsprechend kann das Konturstück 34 um den Haltestift 37 in der Ebene annähernd senkrecht zur Fügerichtung R_{F} verschwenken (siehe Pfeile R_{S}). Vorzugsweise wird die Schwenkbewegung des Konturstücks durch beidseitig angeordnete Federblätter 38 begrenzt. Diese sind seitlich am Kopplungsblock 36 mittels Stiften 39 befestigt und ragen bis zum Konturstück 34.

Neben der Befestigung der Federblätter 38 sorgen die Stifte 39 auch für eine Führung des Elementnests 30 im Langloch 29B des Verbindungsblocks 28.

Wie man anhand von Figur 6 erkennen kann, sind die Elementbacken 33 am Konturstück 34 befestigt. Entsprechend sind die Elementbacken 33 auf die gleiche Weise schwimmend gelagert wie das Konturstück 34.

Figur 7 zeigt eine bevorzugte Ausgestaltung des Elementnests 30 in einer Ansicht entgegen der Fügerichtung R_{F}, also von unten. Darin ist erkennbar, dass der Kopplungsblock 36 federvorgespannt über eine Feder 46 in einer Aussparung 48 gehalten ist. Diese Anordnung gewährleistet eine Ausgleichsbewegung des Konturstücks 34 und der Elementbacken 33 entlang des Pfeils R_{A} in Abhängigkeit von einer Kraftwirkung auf das Konturstück 34. Somit stellt das Elementnest 30 bevorzugt eine schwimmende Halterung des Schweißhilfsfügeteils 2 in der Ebene senkrecht zur Fügerichtung R_{F} bereit, die einen Toleranzausgleich bzw. ein Ausweichen des Schweißhilfsfügeteils 2 in drei Richtungen innerhalb dieser Ebene gewährleistet.

Ausgehend von den oben beschriebenen Ausführungsformen der Elementzufuhrvorrichtung 3 allein oder in Kombination mit dem Elementnest 30 lässt sich die Elementzufuhr im Setz-Schweiß-Gerät 1 mit verkürzten Taktzeiten und mit geringerem apparativen Aufwand im Hinblick auf Sensoren und Antriebe realisieren. Denn erfindungsgemäß bevorzugt ist es mit nur einem Linearantrieb 10 möglich, das Schweißhilfsfügeteil 2 an der Bereitstellungseinheit 7 zu übernehmen und danach der Fügestelle unter dem Elektrodenstempel S verlässlich zuzuführen. Denn genau diese effektive Zustellung ist durch den nur einen Linearantrieb 10 und die Bewegung des Elementnests 30 in die zwei unterschiedlichen Bewegungsrichtungen R₁₀ und R₃₀ über die richtungsändernde Kopplungskomponente 20 garantiert.

In Ergänzung dazu oder in Kombination eines bestehenden Zufuhrsystems eines Schweiß-Setz-Geräts 1 realisiert das Elementnest 30 eine toleranzausgleichende Übernahme eines Schweißhilfsfügeteils 2 an der Bereitstellungseinheit 7 und/oder eine toleranzausgleichende Anordnung oder Positionierung des Schweißhilfsfügeteils 2 an der Fügestelle unter dem Elektrodenstempel S. Denn die schwimmende Lagerung der Halteposition des Schweißhilfsfügeteils 2 zwischen den Elementbacken 33 in Kombination mit dem Konturstück 34 stellen eine effektive Anfahrgenauigkeit an der Bereitstellungseinheit 7 und am Elektrodenstempel S sicher.

Bezugnehmend auf Figur 5 fährt an der Bereitstellungseinheit 7 das Konturstück 34 mit seiner Anlagekonturfläche 35 gegen einen Anschlag 50. Da der Anschlag 50 das Konturstück 34 und damit die Elementbacken 33 über die schwimmende Lagerung (siehe oben) ausrichtet, werden die Elementbacken 33 genau zur Übernahme des Schweißhilfsfügeteils 2 vor der Bereitstellungseinheit 7 positioniert. Entsprechend wird dann nur noch das Schweißhilfsfügeteil 2 durch die Bereitstellungseinheit 7 zwischen die Elementbacken 33 überführt oder dort eingeschoben oder dort geklemmt. Für diesen Vorgang ist bevorzugt keine Sensorik erforderlich, die die genaue Positionierung des Elementnests 30 an der Bereitstellungseinheit 7 oder das Vorhandensein des Schweißhilfsfügeteils 2 im Elementnest 30 überwacht.

Die Positionierung des Schweißhilfsfügeteils 2 unter dem Elektrodenstempel S vor dem Fügevorgang hat ebenfalls seine Genauigkeit aufgrund der Konstruktion des Elementnests 30, insbesondere aufgrund der schwimmenden Lagerung der Elementbacken 33 in Kombination mit dem Konturstück 34. Die Zufuhr des Schweißhilfsfügeteils 2 zur Fügestelle wird vorzugsweise gemäß zweier unterschiedlicher Vorgehensweisen durchgeführt. Gemäß einer ersten bevorzugten Ausführungsform, die in Figur 9 veranschaulicht ist, wird zunächst das Schweißhilfsfügeteil 2 annähernd genau über der Gegenelektrode E positioniert. Diese Position ist aber nicht notwendig ausreichend genau, um anschließend mit dem Elektrodenstempel S den Setz-Schweiß-Prozess durchzuführen. Stattdessen wird in einem nächsten Schritt der Elektrodenstempel S in Fügerichtung R_{F} in das Konturstück 34 und gegen die Anlagekonturfläche 35 bewegt. Durch die schwimmende Lagerung des Konturstücks 34 und des über die Elementbacken 33 gehaltenen Schweißhilfsfügeteils 2 wird durch den Elektrodenstempel S das Schweißhilfsfügeteil 2 optimal zum Elektrodenstempel S und zur Gegenelektrode E ausgerichtet. Nachfolgend wird das Schweißhilfsfügeteil 2 durch den Elektrodenstempel S am Bauteil B geklemmt, das Elementnest 30 entfernt und der Setz-Schweiß-Prozess durchgeführt.

Eine andere Positionierung des Schweißhilfsfügeteils 2 unter dem Elektrodenstempel S ist gemäß einer bevorzugten Ausgestaltung in Figur 11 veranschaulicht. Hier befindet sich vorzugsweise der Elektrodenstempel in einer Position benachbart zum Bauteil B und somit zur Fügestelle. Durch die kombinierte Bewegung des Linearantriebs 10 und der Kopplungskomponente 20 wird das Elementnest 30 in Richtung R₃₀ zum Elektrodenstempel 20 bewegt, bis das Konturstück 34 mit der Anlagekonturfläche 35 am Elektrodenstempel S anliegt. Da die Anlagekonturfläche 35 mit der Seitenfläche oder Mantelfläche des Elektrodenstempels S, insbesondere der radialen Außenseite davon, auf Block fährt, wird gleichzeitig das Schweißhilfsfügeteil 2 über die schwimmende Lagerung des Konturstücks 34 genau unter dem Elektrodenstempel S positioniert.

Nachfolgend bewegt sich der Elektrodenstempel S in Fügerichtung R_{F} und klemmt das Schweißhilfsfügeteil 2 am Bauteil B. Nachdem das Elementnest 30 vom geklemmten Schweißhilfsfügeteil 2 entfernt worden ist (siehe Figur 12), wird der Setz-Schweiß-Prozess durchgeführt.

Aus den obigen Erläuterungen folgt, dass die Arbeitsweise und Taktzeit bestehender Setz-Schweiß-Geräte sowohl mit der Elementzufuhrvorrichtung 3 und mit dem Elementnest 30 allein oder in Kombination verbessert werden kann. Zudem reduziert sich dadurch bevorzugt der Aufwand für Antriebstechnik und Sensorik. Daher umfasst vorliegende Erfindung auch einen Nachrüstsatz mit einer erfindungsgemäß bevorzugten Elementzufuhrvorrichtung 3 und/oder dem Elementnest 30 für bestehende Setz-Schweiß-Geräte. Zudem umfasst vorliegende Erfindung in gleicher Weise ein Setz-Schweiß-Gerät 1 mit der oben beschriebenen Elementzufuhrvorrichtung 3 allein oder in Kombination mit dem Elementnest 30 oder nur mit dem Elementnest 30.

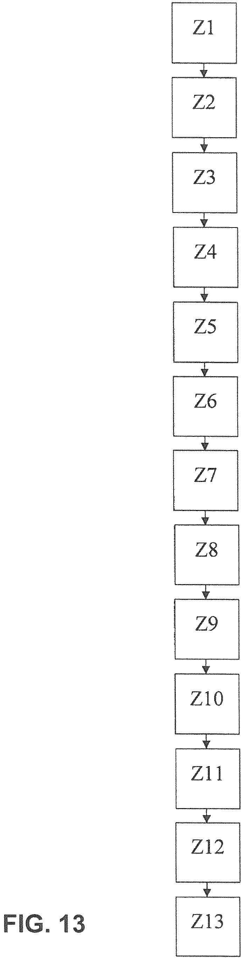

Unter Bezugnahme auf das Flussdiagramm in Figur 13 lässt sich das Zufuhrverfahren des Schweißhilfsfügeteils 2 zur Fügestelle in dem Setz-Schweiß-Gerät 1 mit der oben beschriebenen Elementzufuhrvorrichtung 3 mit den folgenden Schritten zusammenfassen. Zunächst erfolgt im Schritt Z1 ein Zustellen des besetzten Elementnests 30 mit der Linearbewegung des Linearantriebs 10 in der ersten Bewegungsrichtung R₁₀ zumindest zu einer Fügestelle des Schweißhilfsfügeteils 2, wobei das Schweißhilfsfügeteil 2 von den zwei zueinander gegenüberliegend angeordneten und relativ zueinander federnden Elementbacken 33 des Elementnests 30 lösbar gehalten wird. Im Schritt Z2 setzt der am Linearantrieb 10 befestigte Niederhalter 40 auf dem mindestens einen Bauteil B auf. Nachfolgend bewegt sich im Schritt Z3 das Elementnest 30 über die mechanische richtungsändernde Kopplungskomponente 20 in die zweite Bewegungsrichtung R₃₀ zum Positionieren des Schweißhilfsfügeteils 2 an der Fügestelle durch ein weiteres Bewegen des Linearantriebs 10 in der ersten Bewegungsrichtung R₁₀.

Vorzugsweise folgt dann im Schritt Z4 ein Bewegen des Elementnests 30 auf Anschlag an den Elektrodenstempel S, wodurch die mechanische Anschlagausrichtung des Elementnests 30 seitlich am Elektrodenstempel S anliegt und das Schweißhilfsfügeteil 2 gehalten zwischen den Elementbacken 33 in Fügerichtung R_{F} unterhalb des Elektrodenstempels S positioniert ist.

Im bevorzugten darauffolgenden Schritt Z5 wird das Schweißhilfsfügeteil 2 durch den Elektrodenstempel S in Fügerichtung R_{F} gegen das benachbarte Bauteil B an der Fügestelle geklemmt und im nächsten Schritt Z6 wird das Elementnest 33 vom Elektrodenstempel S entfernt. Dadurch erfolgt ebenfalls ein Lösen des Schweißhilfsfügeteils 2 aus dem federnden Halt der Elementbacken 33.

Wie oben bereits beschrieben worden ist, wird das Elementzufuhrverfahren neben der Zufuhr des Schweißhilfsfügeteils 2 zur Fügestelle auch zur Übernahme eines Schweißhilfsfügeteils an der Bereitstellungseinheit 7 benutzt. Daher ist es in einem Schritt Z7 bevorzugt, eine Bewegung des Elementnests 30 parallel zur ersten Bewegungsrichtung R₁₀ des Linearantriebs 10 benachbart zu der Bereitstellungseinheit bzw. Übergabeeinheit 7 für ein Schweißhilfsfügeteil zu blockieren. Auf diese Weise wird das Elementnest 30 über die mechanische richtungsändernde Kopplungskomponente 20 in die zweite Bewegungsrichtung R₃₀ in Richtung der Bereitstellungseinheit 7 bewegt. Diese Bewegung dient dem Positionieren des Elementnests 30 an der Bereitstellungseinheit 7 durch das weitere Bewegen des Linearantriebs 10 in der ersten Bewegungsrichtung R₁₀.

Durch einen bevorzugten sich anschließenden Schritt Z8 wird das Elementnest 30 auf Anschlag an die Bereitstellungseinheit 7 bewegt. Die mechanische Anschlagausrichtung des Elementnests, insbesondere das Konturstück 34 mit seiner Anlagekonturfläche 35, wird auf Block an den Anschlag 50 der Bereitstellungseinheit 7 gefahren und liegt dort an. Auf diese Weise werden die beiden relativ zueinander federnd angeordneten Elementbacken 33 in eine Übergabeposition der Bereitstellungseinheit 7 positioniert, um das Schweißhilfsfügeteil 2 aufzunehmen. Anschließend wird in Schritt Z9 das Schweißhilfsfügeteil 2 aus der Bereitstellungseinheit 7 zwischen die Elementbacken 33 des Elementnests 30 bewegt, so dass das Schweißhilfsfügeteil 2 dort lösbar gehalten ist.

Abschließend wird vorzugsweise bei blockierter Bewegung des Elementnests 30 parallel zur ersten Bewegungsrichtung R₁₀ der Linearantrieb 10 entgegen der ersten Bewegungsrichtung R₁₀ bewegt, wodurch das Elementnest 30 über die mechanische richtungsändernde Kopplungskomponente 20 entgegen der zweiten Bewegungsrichtung R₃₀ in eine Ausgangsposition zurückgestellt wird. Nachdem diese Zurückstellung abgeschlossen ist, wird das besetzte Elementnest 30 mit der Linearbewegung des Linearantriebs 10 in der ersten Bewegungsrichtung R₁₀ zur Fügestelle zugestellt.

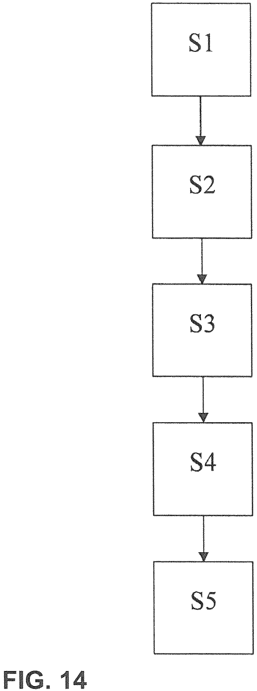

Sollte das Setz-Schweiß-Gerät nur in Kombination mit dem oben beschriebenen Elementnest 30 ausgestattet sein, lässt sich das Zufuhrverfahren des Schweißhilfsfiigeteils zur Fügestelle mit den folgenden Schritten unter Bezugnahme auf das Flussdiagramm in Figur 14 zusammenfassen. Zunächst erfolgt in einem ersten Schritt S1 ein Zustellen des besetzten Elementnests 30 mit dem mindestens einen Antrieb 10 zu der Fügestelle benachbart zu dem Elektrodenstempel S, wobei das Schweißhilfsfügeteil 2 von den zwei einander gegenüberliegend angeordneten und relativ zueinander federnden Elementbacken 33 des Elementnests 30 lösbar gehalten wird. In einem weiteren bevorzugten Schritt wird das Elementnest 30 auf Anschlag an den Elektrodenstempel S bewegt, wodurch die mechanische Anschlagausrichtung des Elementnests 30, also das Konturstück 34 mit der Anlagekonturfläche 35, seitlich am Elektrodenstempel S anliegt und das Schweißhilfsfügeteil gehalten zwischen den Elementbacken 33 in Fügerichtung R_{F} unterhalb des Elektrodenstempels S positioniert ist.

Alternativ ist es zu diesem Schritt ebenfalls bevorzugt, dass zunächst das Elementnest 30 mit dem darin gehaltenen Schweißhilfsfügeteil 2 benachbart zur Fügestelle, vorzugsweise benachbart zur Gegenelektrode E auf dem Bauteil positioniert wird. Nachfolgend wird dann der Elektrodenstempel S in Fügerichtung R_{F} verfahren, bis das Konturstück 34 mit der Anlagekonturfläche 35 an der Außenseite des Elektrodenstempels S anliegt. Auf diese Weise wird ebenfalls über die schwimmende Lagerung des Schweißhilfsfügeteils 2 im Elementnest 30 das Schweißhilfsfügeteil 2 passend unter dem Elektrodenstempel S positioniert.

Nachfolgend erfolgt vorzugsweise im Schritt S3 ein Klemmen des Schweißhilfsfiigeteils 2 durch den Elektrodenstempel S in Fügerichtung R_{F} gegen das benachbarte Bauteil B an der Fügestelle sowie im Schritt S4 ein Entfernen des Elementnests 30 vom Elektrodenstempel S und dadurch ein Lösen des Schweißhilfsfügeteils 2 aus dem federnden Halt der Elementbacken 33.

Im Rahmen der beiden oben beschriebenen Positioniermöglichkeiten des Schweißhilfsfügeteils 2 unter dem Elektrodenstempel S erfolgt somit in einem ergänzenden Schritt ein Ausgleichen von Toleranzen in einer Ebene annähernd senkrecht zur Fügerichtung R_{F} zwischen dem Elektrodenstempel S und dem Elementnest 30 beim Bewegen des Elementnests 30 auf Anschlag an den Elektrodenstempel S mithilfe der schwimmenden Lagerung des Elementnests 30 in Bezug auf seine Befestigung an die Elementzufuhrvorrichtung.

### Bezugszeichenliste

- 1: Setz-Schweiß-Gerät
- 2: Schweißhilfsfügeteil
- 3: Elementzufuhrvorrichtung
- 5: C-Bügel
- 6: Stellglied und Hebel in Bereitstellungseinheit 7
- 7: Bereitstellungseinheit
- 8: Profilschlauch
- 9: Kopplungseinheit zum Roboter
- 10: Linearantrieb
- 12: bewegbares Ende des Linearantriebs
- 14: festes Ende des Linearantriebs
- 16: Linearführung des Elementnests 30
- 17: Schlitten des Elementnests 30
- 18: Schiene der Linearführung 16
- 20: richtungsändernde Kopplungskomponente
- 22: Befestigung für das bewegte Ende 12
- 24: Befestigung für das Elementnest 30
- 26: Befestigung am Schlitten 17
- 28: Verbindungsblock
- 29A: Langloch
- 29B: Langloch
- 30: Elementnest
- 32: Führungsstift
- 33: Elementbacken
- 34: Konturstück
- 35: Anlagekonturfläche
- 36: Kopplungsblock
- 37: Haltestift
- 38: Federblätter
- 39: Stifte
- 40: Niederhalter
- 42, 44: Arme des Niederhalters 40
- 46: Feder
- 48: Aussparung
- 50: Anschlag
- B: Bauteile
- K: Klemmstück, Shim
- S: Elektrodenstempel, Schweißelektrode
- R₁₀: erste Bewegungsrichtung des Linearantriebs 10
- R₃₀: zweite Bewegungsrichtung des Elementnests 30
- R_{F}: Fügerichtung
- R_{S}: Schwenkbewegung, schwimmende Ausgleichsbewegung

## Patentansprüche

1. Eine Elementzufuhrvorrichtung (3) eines Setz-Schweiß-Geräts (1) für ein Schweißhilfsfügeteil (2) mit einem Kopf und einem Schaft, welche die folgenden Merkmale aufweist:
a. einen Linearantrieb (10),
der an dem Schweiß-Setz-Gerät (1) befestigbar ist und
der an einem bewegbaren Ende (12) ein Elementnest (30) aufweist, in welchem ein Schweißhilfsfügeteil (2), insbesondere von einer Übergabeeinheit (7), lösbar aufnehmbar ist, und
b. das Elementnest (30) ist über eine Linearbewegung des Linearantriebs (10) in eine erste Bewegungsrichtung (R₁₀) zumindest zu einer Fügestelle des Schweißhilfsfügeteils (2) bewegbar, wobei
cl. das Elementnest (30) in einer Ebene annähernd senkrecht zu einer Fügerichtung (R_{F}) schwimmend gelagert ist, um über eine mechanische Anschlagausrichtung anliegend an einem Elektrodenstempel (S) in Fügerichtung (R_{F}) unterhalb des Elektrodenstempels (S) positionierbar zu sein,
und/oder wobei
c2. das Elementnest (30) mit dem bewegbaren Ende (12) des Linearantriebs (10) über eine mechanische richtungsändernde Kopplungskomponente (20) verbunden ist, so dass das Elementnest (30) mittels der Linearbewegung des Linearantriebs (10) in der ersten Bewegungsrichtung (R₁₀) in eine zweite Bewegungsrichtung (R₃₀) bewegbar ist, so dass das Schweißhilfsfügeteil (2) an der Fügestelle positionierbar ist, wobei die zweite Bewegungsrichtung (R₃₀) in einem Winkel ungleich 0° und ungleich 180° zur ersten Bewegungsrichtung (R₁₀) orientiert ist.

2. Die Elementzufuhrvorrichtung (3) gemäß Patentanspruch 1, die nur einen Linearantrieb (10) aufweist.

3. Die Elementzufuhrvorrichtung (3) gemäß einem der vorhergehenden Patentansprüche, in der das Elementnest (30) zwei einander gegenüberliegend angeordnete und relativ zueinander federnde Elementbacken (33) aufweist, mit denen das Schweißhilfsfügeteil (2) lösbar haltbar ist und die in einer Ebene senkrecht zu der Fügerichtung (R_{F}) schwimmend gelagert sind.

4. Die Elementzufuhrvorrichtung (3) gemäß Patentanspruch 3, in der das Elementnest (30) als mechanische Anschlagausrichtung ein Konturstück (34) mit einer Anlagekonturfläche (35) angepasst an eine äußere Form eines Elektrodenstempels (S) aufweist, wobei insbesondere eine Flächennormale der Anlagekonturfläche (35) senkrecht zur Fügerichtung (R_{F}) orientiert ist.

5. Die Elementzufuhrvorrichtung (3) gemäß Patentanspruch 4, in der die Elementbacken (33) an dem Konturstück (34) seitlich federnd befestigt sind und das Konturstück (34) in mindestens zwei, vorzugsweise in drei, Richtungen innerhalb einer Ebene senkrecht zur Fügerichtung (R_{F}) federnd auslenkbar angeordnet ist.

6. Die Elementzufuhrvorrichtung (3) gemäß einem der vorhergehenden Patentansprüche, insbesondere in Kombination mit Patentanspruch 1 Alternative c1, in der an dem bewegbaren Ende (12) des Linearantriebs (10) dem Elementnest (30) in einer Zustellrichtung zu einem Elektrodenstempel (S) vorgelagert ein Niederhalter (40) angeordnet ist, mit dem durch eine Anlage des Niederhalters (40) an einem Bauteil (B) und eine weitere Bewegung des Linearantriebs (10) die Bewegung des Elementnests (30) in die zweite Bewegungsrichtung (R₃₀) umwandelbar ist.

7. Die Elementzufuhrvorrichtung (3) gemäß einem der vorhergehenden Patentansprüche, in der das Elementnest (30) entlang einer Linearführung (18) geführt ist, die parallel zur ersten Bewegungsrichtung (R₁₀) des Linearantriebs (10) eine verzögerbare Bewegung des Elementnests (30) gewährleistet, um die Bewegung des Elementnests (30) von der ersten Bewegungsrichtung (R₁₀) in die zweite Bewegungsrichtung (R₃₀) zu ändern.

8. Ein Elementnest (30) eines Schweißhilfsfügeteils (2) in einem Setz-Schweiß-Gerät (1), vorzugsweise in einer Elementzufuhrvorrichtung (3) eines Setz-Schweiß-Geräts (1), wobei das Elementnest (30) in einer Ebene annähernd senkrecht zu einer Fügerichtung (R_{F}) des Schweiß-Setz-Geräts (1) schwimmend gelagert ist, um über eine mechanische Anschlagausrichtung (34, 35) anliegend an einem Elektrodenstempel (S) des Setz-Schweiß-Geräts (1) in Fügerichtung (R_{F}) unterhalb des Elektrodenstempels (S) positionierbar zu sein.

9. Das Elementnest (30) gemäß Patentanspruch 8, wobei das Elementnest (30) zwei einander gegenüberliegend angeordnete und relativ zueinander federnde Elementbacken (33) aufweist, mit denen das Schweißhilfsfügeteil (2) lösbar haltbar ist und die in einer Ebene senkrecht zur Fügerichtung (R_{F}) schwimmend gelagert sind.

10. Das Elementnest (30) gemäß Patentanspruch 9, wobei das Elementnest (30) als mechanische Anschlagausrichtung ein Konturstück (34) mit einer Anlagekonturfläche (35) angepasst an eine äußere Form eines Elektrodenstempels (S) aufweist, wobei insbesondere eine Flächennormale der Anlagekonturfläche (35) senkrecht zur Fügerichtung (R_{F}) orientiert ist.

11. Das Elementnest (30) gemäß Patentanspruch 10, wobei die Elementbacken (33) des Elementnests (30) an dem Konturstück (34) seitlich federnd befestigt sind und das Konturstück (34) in mindestens zwei, vorzugsweise in drei, Richtungen innerhalb einer Ebene senkrecht zur Fügerichtung (R_{F}) federnd auslenkbar angeordnet ist.

12. Ein Setz-Schweiß-Gerät (1) für ein Schweißhilfsfügeteil (2) mit einem Kopf und einem Schaft in Kombination mit der Elementzufuhrvorrichtung (3) gemäß einem der vorhergehenden Patentansprüche 1 bis 7 oder in Kombination mit einem Elementnest (30) gemäß einem der vorhergehenden Patentansprüche 8 bis 11.

13. Ein Nachrüstsatz einer Elementzufuhrvorrichtung (3) gemäß einem der Patentansprüche 1 bis 7 oder eines Elementnests (30) gemäß einem der Patentansprüche 8 bis 11, der mit einem Setz-Schweiß-Gerät (1) verbindbar ist.

14. Ein Zufuhrverfahren eines Schweißhilfsfügeteils (2) zu einer Fügestelle in einem Setz-Schweiß-Gerät (1) mit der Elementzufuhrvorrichtung (3) gemäß einem der vorhergehenden Patentansprüche 1 bis 7, welches die folgenden Schritte aufweist:
a. Zustellen (Z1) des besetzten Elementnests (30) mit der Linearbewegung des Linearantriebs (10) in der ersten Bewegungsrichtung (R₁₀) zumindest zu einer Fügestelle des Schweißhilfsfügeteils (2), wobei das Schweißhilfsfügeteil (2) von zwei zueinander gegenüberliegend angeordneten und relativ zueinander federnden Elementbacken (33) des Elementnests (30) lösbar gehalten wird,
b. Aufsetzen (Z2) eines am Linearantrieb (10) befestigten Niederhalters (40) auf einem Bauteil (B) und
c. danach Bewegen (Z3) des Elementnests (30) über die mechanische richtungsändernde Kopplungskomponente (20) in die zweite Bewegungsrichtung (R₃₀) zum Positionieren an der Fügestelle durch ein weiteres Bewegen (Z4) des Linearantriebs (10) in der ersten Bewegungsrichtung (R₁₀).

15. Das Zufuhrverfahren eines Schweißhilfsfügeteils (2) gemäß Patentanspruch 14, mit dem weiteren Schritt:
d. Bewegen (Z5) des Elementnests (30) auf Anschlag an den Elektrodenstempel (S), wodurch die mechanische Anschlagausrichtung (34, 35) des Elementnests (30) seitlich am Elektrodenstempel (S) anliegt und das Schweißhilfsfügeteil (S) gehalten zwischen den Elementbacken (33) in Fügerichtung (R_{F}) unterhalb des Elektrodenstempels (S) positioniert ist,
e. Klemmen (Z6) des Schweißhilfsfügeteils (2) durch den Elektrodenstempel (S) in Fügerichtung (R_{F}) gegen das benachbarte Bauteil (B) an der Fügestelle,
f. Entfernen (Z7) des Elementnests (30) vom Elektrodenstempel (S) und dadurch Lösen (Z8) des Schweißhilfsfügeteils (2) aus dem federnden Halt der Elementbacken (33).

16. Das Zufuhrverfahren eines Schweißhilfsfügeteils (2) gemäß Patentanspruch 14 oder 15, mit dem weiteren Schritt:
Blockieren (Z9) einer Bewegung des Elementnests (30) parallel zur ersten Bewegungsrichtung (R₁₀) des Linearantriebs (10) benachbart zu einer Übergabeeinheit (7) für ein Schweißhilfsfügeteil und dadurch Bewegen (Z10) des Elementnests (30) über die mechanische richtungsändernde Kopplungskomponente (20) in die zweite Bewegungsrichtung (R₃₀) in Richtung der Übergabeeinheit (7) zum Positionieren des Elementnests (30) an der Übergabeeinheit (7) durch ein weiteres Bewegen des Linearantriebs (10) in der ersten Bewegungsrichtung (R₁₀).

17. Das Zufuhrverfahren eines Schweißhilfsfügeteils (2) gemäß Patentanspruch 16, mit dem weiteren Schritt:
Bewegen (Z11) des Elementnests (30) auf Anschlag an die Übergabeeinheit (7), wodurch die mechanische Anschlagausrichtung (34, 35) des Elementnests (30) an einem Anschlag (50) der Übergabeeinheit (7) anliegt und die beiden relativ zueinander federnd angeordneten Elementbacken (33) in einer Übergabeposition der Übergabeeinheit (7) positioniert sind, und danach
Bewegen (Z12) eines Schweißhilfsfügeteils (2) aus der Übergabeeinheit (7) zwischen die Elementbacken (33) des Elementnests (30), so dass das Schweißhilfsfügeteil (2) dort lösbar gehalten ist.

18. Das Zufuhrverfahren eines Schweißhilfsfügeteils (2) gemäß Patentanspruch 17, mit dem weiteren Schritt:
bei blockierter Bewegung des Elementnests (30) parallel zur ersten Bewegungsrichtung (R₁₀) Bewegen des Linearantriebs (10) entgegen der ersten Bewegungsrichtung (R₁₀), wodurch das Elementnest (30) über die mechanische richtungsändernde Kopplungskomponente (20) entgegen der zweiten Bewegungsrichtung (R₃₀) in eine Ausgangsposition zurückgestellt wird, und danach
Zustellen (Z13) des besetzten Elementnests (30) mit der Linearbewegung des Linearantriebs (10) in der ersten Bewegungsrichtung (R₁₀) zur Fügestelle.

19. Ein Zufuhrverfahren eines Schweißhilfsfügeteils (2) zu einer Fügestelle in einem Setz-Schweiß-Gerät (1) in Kombination mit einem Elementnest (30) gemäß einem der vorhergehenden Patentansprüche 8 bis 11, welches die folgenden Schritte aufweist:
a. Zustellen (S1) des besetzten Elementnests (30) mit mindestens einem Antrieb (10) zu einer Fügestelle benachbart zu einem Elektrodenstempel (S), wobei das Schweißhilfsfügeteil (2) von zwei einander gegenüberliegend angeordneten und relativ zueinander federnden Elementbacken (33) des Elementnests (30) lösbar gehalten wird,
b. Bewegen (S2) des Elementnests (30) auf Anschlag an den Elektrodenstempel (S), wodurch die mechanische Anschlagausrichtung (34, 35) des Elementnests (30) seitlich am Elektrodenstempel (S) anliegt und das Schweißhilfsfügeteil (2) gehalten zwischen den Elementbacken (33) in Fügerichtung (R_{F}) unterhalb des Elektrodenstempels (S) positioniert ist,
c. Klemmen (S3) des Schweißhilfsfügeteils (2) durch den Elektrodenstempel (S) in Fügerichtung (R_{F}) gegen das benachbarte Bauteil (B) an der Fügestelle,
d. Entfernen (S4) des Elementnests (30) vom Elektrodenstempel (S) und dadurch Lösen des Schweißhilfsfügeteils (2) aus dem federnden Halt der Elementbacken (33).

20. Das Zufuhrverfahren eines Schweißhilfsfügeteils (2) gemäß Patentanspruch 19, mit dem weiteren Schritt:
Ausgleichen (S5) von Toleranzen in einer Ebene annähernd senkrecht zur Fügerichtung (R_{F}) zwischen dem Elektrodenstempel (S) und dem Elementnest (30) beim Bewegen des Elementnests (30) auf Anschlag am Elektrodenstempel (S) mit Hilfe der schwimmenden Lagerung des Elementnests (30) in Bezug auf eine Befestigung.
